# EUROPÄISCHE PATENTSCHRIFT

(11) **EP 4 259 377 B1**
(45) Veröffentlichungstag und Bekanntmachung des Hinweises auf die Patenterteilung: **28.10.2026**
(21) Anmeldenummer: 21823239.5
(22) Anmeldetag: 29.11.2021
(51) Int. Cl.: B23Q 3/155, B23Q 11/08, B23Q 11/02, B23Q 17/00

(54) **WERKZEUGWECHSLER**
TOOL CHANGER
CHANGEUR D'OUTIL

(30) Priorität: 08.12.2020 CH 15562020
(43) Veröffentlichungstag der Anmeldung: 18.10.2023
(73) Patentinhaber: Reishauer AG, 8304 Wallisellen (CH)
(72) Erfinder: MÜLLER, Michel, 8610 Uster (CH); SENNHAUSER, Erwin, 8451 Kleinandelfingen (CH); FELLMANN, Oliver, 8122 Binz (CH); KREIER, Pirmin Eric, 8304 Wallisellen (CH)
(74) Vertreter: Detken, Andreas
(86) Internationale Anmeldenummer: PCT/EP2021/083316
(87) Internationale Veröffentlichungsnummer: WO 2022/122443

(56) Entgegenhaltungen:
- EP-A1- 0 132 599
- EP-A1- 3 566 808
- CN-A- 111 185 788
- DE-A1- 10 163 294
- DE-A1- 102005 003 220
- DE-A1- 102008 014 779
- DE-A1- 102013 106 427
- DE-C1- 4 116 091
- DE-U1- 202011 104 037
- JP-A- 2003 311 569
- JP-U- S6 071 541
- US-A- 3 339 273
- US-A1- 2020 238 466

## Beschreibung

### TECHNISCHES GEBIET

Die vorliegende Erfindung betrifft einen Werkzeugwechsler für eine Werkzeugmaschine, eine damit ausgestattete Werkzeugmaschine sowie die Verwendung eines solchen Werkzeugwechslers. Bei der Werkzeugmaschine kann es sich um eine Verzahnmaschine handeln, insbesondere für die Wälzbearbeitung. Das auszuwechselnde Werkzeug kann insbesondere ein Wälzschälwerkzeug sein.

### STAND DER TECHNIK

In Werkzeugmaschinen ist es häufig erforderlich, ein Werkzeug gegen ein anderes Werkzeug auszuwechseln, beispielsweise, um ein abgenutztes Werkzeug nachzuschärfen. Das gilt insbesondere auch für Verzahnmaschinen. Beispielsweise haben Wälzschälwerkzeuge eine begrenzte Standzeit und müssen darum regelmässig ausgewechselt werden. Um Aufwand und Zeit für den Werkzeugwechsel zu reduzieren, wurden im Stand der Technik automatische Werkzeugwechsler vorgeschlagen.

So offenbart US20170232564A1 einen Werkzeugwechsler an einer Wälzfräsmaschine. Beim Werkzeugwechsel wird das Werkzeug in Form eines Wälzfräsers vom Werkzeugkopf der Wälzfräsmaschine entfernt und von einer Aufhängevorrichtung aufgenommen. Die Aufhängevorrichtung wird mit Hilfe einer horizontalen Transportschiene zu einer Zwischenposition transportiert und dort um eine vertikale Achse in eine Entnahmeposition rotiert, so dass der Wälzfräser entnommen werden kann. Dieser Werkzeugwechsler eignet sich bauartbedingt nur für Maschinen, deren Werkzeugrotationsachse horizontal verläuft, und nur für Werkzeuge, die beidseitig im Werkzeugkopf gelagert sind. Der Werkzeugwechsler ist insbesondere nicht für Wälzschälwerkzeuge geeignet. Er beansprucht zudem viel Platz.

US2014106950A1 offenbart einen Werkzeugwechsler mit einem Greifer, der an einer Schlitteneinheit mit drei Schlitten montiert ist. In einem Umlaufmagazin sind Fräswerkzeuge vertikal aufgehängt. Der Umlauf im Umlaufmagazin erfolgt in einer horizontalen Ebene. Die Fräswerkzeuge können mit dem Werkzeugwechsler zwischen dem Umlaufmagazin und einem Bearbeitungskopf hin und her transportiert werden. Auch dieser Werkzeugwechsler eignet sich bauartbedingt nur für Werkzeuge, die beidseitig im Werkzeugkopf gelagert sind, und ist daher für Wälzschälwerkzeuge ungeeignet. Zudem beansprucht auch dieser Werkzeugwechsler viel Platz.

US2019070682A1 offenbart einen Werkzeugwechsler, der Wälzschälwerkzeuge mit Hilfe eines horizontalen Schlittens zwischen einem Umlaufmagazin und einem Bearbeitungskopf hin und her transportiert. Der Umlauf des Umlaufmagazins erfolgt hier in einer vertikalen Ebene. Auch dieser Werkzeugwechsler beansprucht verhältnismässig viel Platz.

US2020130120A1 offenbart einen Werkzeugwechsler, mit dem ebenfalls Wälzschälwerkzeuge ausgewechselt werden können. Die Werkzeuge sind in einem trommelförmigen Werkzeugmagazin gelagert. Der Werkzeugwechsler weist einen Doppelarm auf, der um eine horizontale Achse schwenkbar ist. An den freien Enden des Doppelarms ist jeweils ein Greifabschnitt ausgebildet. Der Doppelarm ergreift mit den Greifabschnitten sowohl ein Bearbeitungswerkzeug, das auf der Werkzeugspindel aufgespannt ist, als auch ein Werkzeug, das aus dem Werkzeugmagazin ausgestossen wurde, und tauscht diese beiden Werkzeuge gegeneinander aus. Auch dieser Werkzeugwechsler beansprucht relativ viel Platz.

WO2012027770A2 offenbart ein Werkzeugmagazin, in dem eine Mehrzahl von Biegewerkzeugen in übereinander angeordneten Werkzeugaufnahmen abgelegt sind. Ein Gelenkarmroboter entnimmt die Werkzeuge aus dem Magazin und überführt sie zu einer Biegemaschine. Ein Einsatz an einer Verzahnmaschine wird nicht offenbart.

US2010173762A1 offenbart einen Werkzeugwechsler mit einer heb- und senkbaren sowie verdrehbaren Tragsäule, an der ein Doppelgreifer angebracht ist. Der Werkzeugwechsler transportiert Werkzeuge zwischen einer Werkzeugspindel und einem Kettenmagazin, in dem die Werkzeuge hängend aufgenommen sind. Der Werkzeugwechsler weist zur Erzeugung der Hub- und Drehbewegungen ein komplexes Kurvengetriebe auf. Der Aufbau des Werkzeugwechslers ist verhältnismässig komplex. Ein Einsatz an einer Verzahnmaschine wird auch hier nicht offenbart.

US 3 339 273 A offenbart einen Werkzeugwechsler nach dem Oberbegriff des Anspruchs 1.

### DARSTELLUNG DER ERFINDUNG

Es ist eine Aufgabe der vorliegenden Erfindung, einen Werkzeugwechsler anzugeben, der aufgrund seiner Konstruktion besonders platzsparend ausgebildet werden kann.

Diese Aufgabe wird durch einen Werkzeugwechsler nach Anspruch 1 gelöst. Weitere Ausführungsformen sind in den abhängigen Ansprüchen angegeben.

Es wird ein Werkzeugwechsler zum Auswechseln von Werkzeugen in einer Werkzeugmaschine, insbesondere einer Verzahnmaschine, angegeben. Dieser weist auf:
eine Tragstruktur;
einen Hubschlitten, der an der Tragstruktur entlang einer vertikal im Raum verlaufenden Hubrichtung geführt ist;
einen Schwenkarm, der um eine vertikal im Raum verlaufende Schwenkachse schwenkbar an dem Hubschlitten angebracht ist;
einen Werkzeuggreifer, der an dem Schwenkarm angebracht ist und der dazu ausgebildet ist, ein Werkzeug zu ergreifen; und
ein Werkzeugmagazin mit einer Mehrzahl von vertikal übereinander angeordneten Werkzeugaufnahmen,
wobei der Werkzeugwechsler dazu ausgebildet ist, ein vom Werkzeuggreifer ergriffenes Werkzeug durch eine kombinierte Hub- und Schwenkbewegung des Schwenkarms wahlweise zwischen einer der Werkzeugaufnahmen und einer Werkzeugspindel der Werkzeugmaschine oder zwischen zwei unterschiedlichen Werkzeugaufnahmen des Werkzeugmagazins zu bewegen.

Indem das Werkzeugmagazin aus mehreren vertikal übereinander angeordneten Werkzeugaufnahmen gebildet wird, resultiert ein sehr geringer Platzbedarf für das Werkzeugmagazin. Ein solches Werkzeugmagazin kann sehr einfach be- und entladen werden. Dazu schlägt die Erfindung einen vertikal verfahrbaren Hubschlitten vor, an dem ein horizontal verschwenkbarer Schwenkarm mit Werkzeuggreifer schwenkbar angebracht ist. Eine solche Anordnung lässt sich einfach und kostengünstig realisieren und beansprucht ebenfalls sehr wenig Platz. Insgesamt resultiert ein sehr kompakter Werkzeugwechsler, der sich ohne Weiteres direkt in die Werkzeugmaschine integrieren lässt, indem die Tragstruktur mit dem Maschinenbett der Werkzeugmaschine verbunden wird.

Die Tragstruktur umfasst eine vertikale Säule, die dazu ausgebildet ist, mit einem unteren Ende an einem Maschinenbett der Werkzeugmaschine angebracht zu werden. Der Hubschlitten ist dann entlang der Hubrichtung an der Säule geführt. Auch die Werkzeugaufnahmen sind an dieser Säule angebracht.

Um eine besonders einfache Bestückung des Werkzeugmagazins zu ermöglichen, kann eine der Werkzeugaufnahmen des Werkzeugmagazins beweglich, insbesondere entlang einer horizontalen Bestückungsrichtung verschiebbar und/oder um eine vertikale Bestückungsschwenkachse schwenkbar, an der Tragstruktur angebracht sein. Insbesondere kann der Werkstückwechsler eine Aussenwand aufweisen, die einen Innenraum des Werkzeugwechslers von einem Aussenraum trennt. Die Aussenwand kann dann eine Werkzeugbestückungsöffnung zum Austausch von Werkzeugen zwischen dem Innenraum und dem Aussenraum aufweisen. Es ist dann von besonderem Vorteil, wenn die bewegliche Werkzeugaufnahme durch die Werkzeugbestückungsöffnung hindurch bewegbar ist, um die bewegliche Werkzeugaufnahme vom Aussenraum her zugänglich zu machen. Die restlichen Werkzeugaufnahmen können stationär mit der Tragstruktur verbunden sein.

Der Werkzeugwechsler kann eine Werkzeugbestückungstür aufweisen, die dazu ausgebildet ist, die Werkzeugbestückungsöffnung wahlweise zu verschliessen oder freizugeben. Die Werkzeugbestückungstür kann einen Zustandsmelder aufweisen, um den Öffnungszustand der Werkzeugbestückungsöffnung (offen oder geschlossen) an eine Steuereinrichtung zu melden. Die Steuereinrichtung kann dazu ausgebildet sein, Bewegungen im Innenraum des Werkzeugwechslers zu verhindern, solange die Werkzeugbestückungsöffnung offen ist, und/oder ein Öffnen der Werkzeugbestückungstür zu verhindern, solange Bewegungen im Innenraum des Werkzeugwechslers ausgeführt werden.

In bevorzugten Ausgestaltungen ist die bewegliche Werkzeugaufnahme wie folgt ausgeführt: Der Werkzeugwechsler weist eine Bestückungslinearführung und einen durch die Bestückungslinearführung entlang der horizontalen Bestückungsrichtung verschiebbar geführten Bestückungswagen auf. Die bewegliche Werkzeugaufnahme ist dann um die vertikale Bestückungsschwenkachse schwenkbar am Bestückungswagen angebracht. Durch diese Kombination aus linearer Verschiebbarkeit und Schwenkbarkeit der beweglichen Werkzeugaufnahme resultiert eine besonders gute Zugänglichkeit dieser Werkzeugaufnahme bei minimalem Platzbedarf.

Vorzugsweise weist der Werkzeugwechsler ausserdem ein Schott auf, das dazu ausgebildet ist, den Innenraum des Werkzeugwechslers von einem Bearbeitungsraum der Werkzeugmaschine zu trennen. Das Schott weist dann eine Schottöffnung auf, und der Werkzeugwechsler weist eine Schotttür auf, die dazu ausgebildet ist, die Schottöffnung wahlweise zu verschliessen oder freizugeben. Dazu kann die Schotttür einen entsprechenden Antrieb aufweisen, beispielsweise einen pneumatischen Antrieb. Die Schottöffnung ist genügend hoch, so dass der Schwenkarm mit dem daran angebrachten Werkzeuggreifer in mindestens einer Stellung des Hubschlittens, bevorzugt in einem bestimmten Bereich von Stellungen des Hubschlittens, durch die freigegebene Schottöffnung hindurch bewegt werden kann. Vorzugsweise ist die Schottöffnung auch genügend hoch, dass sich der Hubschlitten um einen gewissen Betrag entlang der Hubrichtung bewegen lässt, wenn sich der Schwenkarm durch die Schottöffnung hindurch erstreckt. Auf diese Weise werden der Werkzeugwechsel und der nachstehend näher beschriebene optionale Spannmittelwechsel und/oder Werkstückwechsel erleichtert.

Der Werkzeugwechsler kann ausserdem eine Lesestation aufweisen, wobei die Lesestation derart angeordnet ist, dass ein vom Werkzeuggreifer gehaltenes Werkzeug durch eine kombinierte Hub- und Schwenkbewegung des Schwenkarms zur Lesestation bewegbar ist, einen maschinenlesbaren Datenträger am Werkzeug auszulesen. Beispielsweise kann es sich bei dem Datenträger um einen RFID-Transponder handeln. Bei der Lesestation kann es sich entsprechend um eine RFID-Station mit einem RFID-Transceiver handeln. In anderen Ausführungen kann es sich bei dem Datenträger um einen optischen Datenträger, z.B. einen Barcode oder einen QR-Code, handeln, und die Lesestation kann dann zum optischen Auslesen eines solchen optischen Datenträgers ausgebildet sein. Dazu kann die Lesestation eine entsprechende Lesevorrichtung aufweisen, die einen optischen Sensor, z.B. eine Kamera, und gegebenenfalls eine Lichtquelle, z.B. eine LED-Lichtquelle, umfasst. Auch ein magnetischer Datenträger oder ein taktil auslesbarer Datenträger sind denkbar.

Um Beschädigungen der Lesestation zu vermeiden, kann die Lesestation gefedert ausgeführt sein. Dazu kann die Lesestation eine Basis, die erwähnte Lesevorrichtung und ein dazwischen angeordnetes Federelement aufweisen, derart, dass die Lesevorrichtung gegenüber der Basis entgegen einer vom Federelement erzeugten Rückstellkraft vertikal nach unten bewegbar ist. Dadurch wird eine Beschädigung der Lesevorrichtung oder des entsprechenden Datenträgers beim Aufsetzen des Werkzeugs auf die Lesestation vermieden. Dies ist insbesondere dann von Vorteil, wenn unterschiedlich lange Werkzeuge eingesetzt werden und die Länge des jeweiligen Werkzeugs vorab nicht bekannt ist. Indem die Lesestation gefedert ausgeführt ist, kann der Hubschlitten zum Auslesen des Werkzeugs immer in die gleiche Position bewegt werden, unabhängig von der Länge des Werkzeugs. Die unterschiedlichen Längen der Werkzeuge werden dann durch das Federelement kompensiert.

Der Werkzeugwechsler kann zudem einen Werkzeugreiniger aufweisen. Dieser ist vorzugsweise derart angeordnet, dass ein vom Werkzeuggreifer gehaltenes Werkzeug durch eine kombinierte Hub- und Schwenkbewegung des Schwenkarms zum Werkzeugreiniger bewegbar ist, um einen Werkzeughalter des Werkzeugs zu reinigen. Insbesondere kann der Werkzeugreiniger an der Tragstruktur angeordnet sein, insbesondere oberhalb der Werkzeugaufnahmen. Wenn die Tragstruktur als Säule ausgebildet ist, kann der Werkzeugreiniger an einem oberen Ende der Säule angeordnet sein.

Um unproduktive Nebenzeiten zu verringern, kann der Werkzeuggreifer als Mehrfachgreifer mit mindestens zwei Greiferbackenpaaren ausgebildet sein, so dass er zwei oder mehr Werkzeuge ergreifen kann.

Der Werkzeuggreifer kann starr oder bewegbar an dem Schwenkarm angebracht sein. Insbesondere kann der Werkzeuggreifer schwenkbar, beispielsweise um eine vertikale oder horizontale Greiferschwenkachse schwenkbar, und/oder verschiebbar, insbesondere entlang einer horizontalen Greiferverschieberichtung linear verschiebbar, an dem Schwenkarm angebracht sein.

Mit dem Werkzeuggreifer können auch andere Objekte als Werkzeuge ergriffen werden, um mit diesen Objekten zusätzliche Funktionen auszuführen. So kann der Werkzeugwechsler beispielsweise einen Kegelreiniger umfassen, wobei der Kegelreiniger derart ausgebildet ist, dass er vom Werkzeuggreifer ergreifbar ist. Der Kegelreiniger kann durch eine kombinierte Hub- und Schwenkbewegung des Schwenkarms zur Werkzeugspindel bewegt werden, um deren Konusaufnahme zu reinigen. Auch kann der Werkzeugwechsler einen Messtaster umfassen, wobei dieser Messtaster z.B. für eine Rund- und Planlaufmessung des Werkstückspannmittels der Werkzeugmaschine ausgebildet sein kann. Der Messtaster kann dann wiederum so ausgebildet sein, dass er vom Werkzeuggreifer ergreifbar ist, um ihn durch eine kombinierte Hub- und Schwenkbewegung des Schwenkarms in eine Messposition zu bewegen. Der Messtaster kann in der Messposition weiterhin vom Werkzeuggreifer gehalten sein, oder er kann in der Messposition von einem anderen Bauteil der Werkzeugmaschine aufgenommen sein, z.B. auf der Werkzeugspindel aufgespannt sein.

Der Werkzeugwechsler kann dazu ausgebildet sein, nicht nur Werkzeuge auszuwechseln, sondern auch Werkstücke. Dazu kann der Werkzeugwechsler zusätzlich einen Werkstückgreifer aufweisen, der am Schwenkarm angebracht ist. Der Werkstückgreifer kann in der gleichen Weise wie der Werkzeuggreifer durch kombinierte Hub- und Schwenkbewegungen des Schwenkarms bewegt werden. Der Werkstückgreifer kann dann dazu ausgebildet sein, Werkstücke von einer Werkstückablage aufzunehmen und an eine Werkstückspindel der Werkzeugmaschine zu übergeben.

Um die kombinierte Hub- und Schwenkbewegung des Schwenkarms zu erzeugen, kann der Werkzeugwechsler einen Hubschlittenantrieb aufweisen, um den Hubschlitten zu einer Hubbewegung entlang der Hubrichtung anzutreiben, und einen Schwenkantrieb, um den Schwenkarm zu einer Schwenkbewegung gegenüber dem Hubschlitten um die Schwenkachse anzutreiben. Ausserdem kann der Werkzeugwechsler eine Steuereinrichtung aufweisen, die dazu ausgebildet ist, den Hubschlittenantrieb, den Schwenkantrieb und den Greifer sowie optional weitere Komponenten des Werkzeugwechslers anzusteuern. Die Steuereinrichtung kann ein integrierter Teil der Maschinensteuerung der Werkzeugmaschine sein; es ist aber auch denkbar, eine eigenständige Steuereinrichtung bereitzustellen, die nur die Komponenten des Werkzeugwechslers ansteuert und mit der eigentlichen Maschinensteuerung kommuniziert. Die Steuereinrichtung kann insbesondere einen geeignet programmierten Steuerrechner umfassen. Dieser kann mit geeigneten NC-Achsmodulen für die einzelnen Antriebe zusammenwirken.

Die Steuereinrichtung kann insbesondere dazu ausgebildet sein, mindestens einen der folgenden Vorgänge zu steuern:
a) Ergreifen eines Werkzeugs mit dem Werkzeuggreifer;
b) Bewegen eines vom Werkzeuggreifer ergriffenen Werkzeugs zwischen einer der Werkzeugaufnahmen und einer Werkzeugspindel der Werkzeugmaschine durch eine kombinierte Hub- und Schwenkbewegung des Schwenkarms;
c) Bewegen eines vom Werkzeuggreifer ergriffenen Werkzeugs zwischen zwei unterschiedlichen Werkzeugaufnahmen des Werkzeugmagazins durch eine kombinierte Hub- und Schwenkbewegung des Schwenkarms;
d) Öffnen und Schliessen der Schotttür; und
e) Bewegen eines vom Werkzeuggreifer ergriffenen Werkzeugs zur Lesestation durch eine kombinierte Hub- und Schwenkbewegung des Schwenkarms und Auslesen eines Datenträgers an dem ergriffenen Werkzeug;
f) Bewegen eines vom Werkzeuggreifer ergriffenen Werkzeugs zum Werkzeugreiniger durch eine kombinierte Hub- und Schwenkbewegung des Schwenkarms und Reinigen eines Werkzeughalters des ergriffenen Werkzeugs mit dem Werkzeugreiniger;
g) Bewegen des Werkzeuggreifers relativ zum Schwenkarm; und
h) Bewegen eines vom Werkzeuggreifer ergriffenen Kegelreinigers zur Werkzeugspindel durch eine kombinierte Hub- und Schwenkbewegung des Schwenkarms;
j) Bewegen eines vom Werkzeuggreifer ergriffenen Messtasters in eine Messposition durch eine kombinierte Hub- und Schwenkbewegung des Schwenkarms;
k) Ergreifen eines Werkstücks mit dem Werkstückgreifer und Bewegen eines vom Werkstückgreifer ergriffenen Werkstücks zwischen einer Werkstückablage und einer Werkstückspindel der Werkzeugmaschine durch eine kombinierte Hub- und Schwenkbewegung des Schwenkarms.

Die vorliegende Erfindung offenbart insofern auch ein Verfahren zum Betrieb eines Werkzeugwechslers der vorstehend genannten Art, wobei das Verfahren die Ausführung von mindestens einem der oben genannten Vorgänge a) bis k) umfasst.

In bevorzugten Ausführungsformen dient der Werkzeugwechsler nicht nur zum Wechseln von Werkzeugen, sondern kann ausserdem auch zum Wechsel eines Spannmittels für die Werkstücke eingesetzt werden. Dazu weist der Werkzeugwechsler einen Zusatzarm auf, der um eine vertikal verlaufende Zusatzschwenkachse schwenkbar an dem Schwenkarm angebracht ist, derart, dass die Zusatzschwenkachse des Zusatzarms und die Schwenkachse des Schwenkarms parallel und beabstandet zueinander verlaufen. Der Zusatzarm ist vorzugsweise in einer Ruhestellung lösbar mit dem Schwenkarm verriegelbar, um eine Schwenkbewegung des Zusatzarms um die Zusatzschwenkachse zu verhindern. Der Zusatzarm ist dazu ausgebildet, an ihm ein Werkstückspannmittel der Werkzeugmaschine zu befestigen.

Dazu kann der Zusatzarm z.B. eine Aufnahme für einen Spannmittelhalter aufweisen. Diese Aufnahme kann z.B. als eine bajonettartige Verbindung zwischen dem Zusatzarm und dem Spannmittelhalter ausgestaltet sein. Dazu kann die Aufnahme ringförmig sein, mit optionalen Ausnehmungen am Innenumfang zur Herstellung der Bajonettverbindung. Der Werkstückwechsler kann dementsprechend auch einen Spannmittelhalter aufweisen, der dazu ausgebildet ist, derart lösbar mit dem Zusatzarm und dem Werkstückspannmittel verbunden zu werden, dass das Werkstückspannmittel über den Spannmittelhalter am Zusatzarm befestigbar ist. Insbesondere kann das Werkstückspannmittel hängend am Zusatzarm befestigbar sein. Dies ermöglicht es, einen besonders einfachen und leichten Spannmittelhalter einzusetzen, da dieser nicht durch Torsions- oder Scherkräfte belastet wird.

Durch den Zusatzarm wird ein besonders einfacher Wechsel des Spannmittels für die Werkstücke ermöglicht. Externe Hilfsmittel wie bauseitige Kräne, mobile Kranwagen, spezielle Rüstwagen mit entsprechender Zusatzfunktion usw. können entfallen. Dadurch können erhebliche Kosten eingespart werden, und der Platzbedarf für externe Hilfsmittel entfällt.

Am Zusatzarm kann ein Kraftaufnehmer angeordnet sein, um eine Belastung des Zusatzarms in vertikaler Richtung zu erfassen. Beispielsweise kann die Aufnahme für den Spannmittelhalter über den Kraftaufnehmer mit dem Zusatzarm verbunden sein. Auf diese Weise kann eine Überlastung des Systems aus Schwenkarm und Zusatzarm erkannt werden.

Die vorliegende Erfindung offenbart auch die Verwendung eines Werkzeugwechslers der vorstehend genannten Art zum Wechseln eines Werkstückspannmittels an einer Werkzeugmaschine. Ein entsprechendes Verfahren umfasst mindestens einen, bevorzugt alle der folgenden Schritte, wobei diese Schritte nicht notwendigerweise in der angegebenen Reihenfolge ausgeführt werden:
Ausführen einer kombinierten Hub- und Schwenkbewegung des Schwenkarms und Verschwenken des Zusatzarms relativ zum Schwenkarm, um den Zusatzarm in eine Stellung zu bringen, in der er über den Spannmittelhalter mit dem Werkstückspannmittel verbindbar ist;
Verbinden des Spannmittelhalters mit dem Zusatzarm und mit dem Werkstückspannmittel;
Anheben des über den Spannmittelhalter am Zusatzarm befestigten Werkstückspannmittels durch eine Hubbewegung des Hubschlittens;
Ausschwenken des am Spannmittelhalter befestigten Werkstückspannmittels in einen Aussenraum der Werkzeugmaschine durch Verschwenken des Schwenkarms; und
Ablegen des am Spannmittelhalter befestigten Werkstückspannmittels auf einer Spannmittelablage durch eine Hubbewegung des Hubschlittens.

Die vorliegende Erfindung bezieht sich des Weiteren auf eine Werkzeugmaschine mit einem Werkzeugwechsler der vorstehend genannten Art. Bei der Werkzeugmaschine kann es sich um eine Verzahnmaschine handeln, insbesondere eine Verzahnmaschine für die Wälzbearbeitung. Die Werkzeugmaschine weist ein Maschinenbett und eine Werkzeugspindel auf. Die Werkzeugspindel dient dazu, ein Werkzeug zu einer Rotation um eine Werkzeugachse anzutreiben. Die Werkzeugspindel ist vorzugsweise derart gegenüber dem Maschinenbett schwenkbar in der Werkzeugmaschine angeordnet, dass sie in eine Stellung gebracht werden kann, in der die Werkzeugachse vertikal im Raum verläuft, um einen Werkzeugwechsel vorzunehmen. Der Werkzeugwechsler ist dann derart am Maschinenbett angeordnet, dass ein vom Werkzeuggreifer ergriffenes Werkzeug durch eine kombinierte Hub- und Schwenkbewegung des Schwenkarms von einer der Werkzeugaufnahmen des Werkzeugmagazins zur Werkzeugspindel bewegbar ist.

Die Werkzeugspindel kann insbesondere gegenüber dem Maschinenbett entlang mindestens einer Richtung verfahrbar sein, wobei diese Richtung quer zur Hubrichtung des Hubschlittens verläuft, um die Werkzeugspindel wahlweise in eine Stellung zu bringen, in der ein am Werkzeuggreifer ergriffenes Werkzeug auf der Werkzeugspindel aufspannbar ist, oder in eine Rückzugsstellung, in der sich die Werkzeugspindel mit einem darauf aufgespannten Werkzeug ausserhalb einer Kollisionskontur einer Schwenkbewegung des Schwenkarms befindet. Vorzugsweise verläuft diese Verfahrrichtung horizontal. Die Werkzeugspindel kann ausserdem entlang einer parallel zur Hubrichtung des Hubschlittens verlaufenden Richtung verfahrbar sein.

Die Werkzeugmaschine weist vorzugsweise ausserdem eine Werkstückspindel mit einem Werkstückspannmittel auf. Die Werkstückspindel treibt das Werkstückspannmittel zu einer Rotation um eine Werkstückachse an. Vorzugsweise verläuft die Werkstückachse vertikal im Raum. Wenn es sich bei der Werkzeugmaschine um eine Verzahnmaschine für die Wälzbearbeitung handelt, weist die Werkzeugmaschine eine Maschinensteuerung auf, die eine Wälzkopplung zwischen den Rotationsbewegungen der Werkzeugspindel und der Werkstückspindel herstellt, d.h. diese Bewegungen derart koppelt, dass die entsprechenden Drehzahlen in einem vorgebbaren festen Verhältnis und einer vorgebbaren Phasenbeziehung zueinander stehen.

Die Werkstückspindel ist vorzugsweise derart am Maschinenbett angeordnet, dass das Werkstückspannmittel am Zusatzarm befestigt werden kann, wenn dieser gegenüber dem Schwenkarm aus der Ruhestellung heraus verschwenkt ist. Dazu ist die Werkstückspindel vorzugsweise gegenüber dem Maschinenbett entlang mindestens einer Richtung verfahrbar, wobei diese Richtung quer zur Hubrichtung des Hubschlittens verläuft, um die Werkzeugspindel in eine Stellung zu bringen, in der die Aufnahme am Zusatzarm vertikal über einem auf der Werkstückspindel befindlichen Werkstückspannmittel angeordnet ist. Vorzugsweise verläuft diese Richtung wiederum horizontal. Sie verläuft vorzugsweise orthogonal zu der horizontalen Richtung, entlang derer die Werkzeugspindel horizontal verfahrbar ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen jeweils in einer schematischen perspektivischen Ansicht:
- Fig. 1: eine Werkzeugmaschine mit einem Werkzeugwechsler gemäss einer ersten Ausführungsform der vorliegenden Erfindung in einer Parkstellung, wobei die Werkzeugmaschine und der Werkzeugwechsler aus Gründen der besseren Übersichtlichkeit stark vereinfacht dargestellt sind;
- Fig. 2: den Werkzeugwechsler aus Fig. 1 alleine;
- Fig. 3: den Werkzeugwechsler nach Fig. 2, wobei das Schott der Figuren 1 und 2 aus Gründen der besseren Übersichtlichkeit weggelassen wurde;
- Fig. 4: den Werkzeugwechsler aus einer anderen Blickrichtung, ohne Schott;
- Fig. 5: den Werkzeugwechsler in einer Aufspannstellung, ohne Schott;
- Fig. 6: die Werkzeugmaschine der Fig. 1 mit dem Werkzeugwechsler in der Aufspannstellung, ohne Schott;
- Fig. 7: den Werkzeugwechsler in einer Übergabestellung, ohne Schott;
- Fig. 8: den Werkzeugwechsler in einer Bereitschaftsstellung, ohne Schott;
- Fig. 9A bis Fig. 9D: vier Ansichten eines Teils des Werkzeugwechslers zur Illustration der Bewegung des Werkzeugbestückungsplatzes;
- Fig. 10: ein Werkzeug mit Werkzeughalter und RFID-Transpondern;
- Fig. 11: den Werkzeugwechsler in einer Erfassungsstellung, ohne Schott;
- Fig. 12: einen Ausschnitt aus der Werkzeugmaschine der Fig. 1, mit einem Kegelreiniger, der im Werkzeuggreifer aufgenommen ist;
- Fig. 13: einen weiteren Ausschnitt aus der Werkzeugmaschine der Fig. 1, mit einem Messtaster, der im Werkzeuggreifer aufgenommen ist;
- Fig. 14: den Werkzeugwechsler der ersten Ausführungsform in einer Ansicht, die der Fig. 3 entspricht, wobei aber zusätzlich weitere Komponenten dargestellt sind, die in den Figuren 1 bis 13 aus Gründen der besseren Übersichtlichkeit weggelassen wurden;
- Fig. 15: eine Detailansicht der Fig. 14 im Bereich XV;
- Fig. 16: einen Ausschnitt aus einem Werkzeugwechsler gemäss einer zweiten Ausführungsform;
- Fig. 17: einen Werkzeugwechsler gemäss einer dritten Ausführungsform, ohne Schott;
- Fig. 18: einen Ausschnitt aus einem Werkzeugwechsler gemäss einer vierten Ausführungsform;
- Fig. 19: einen Ausschnitt aus einem Werkzeugwechsler gemäss einer fünften Ausführungsform in einer ersten Position;
- Fig. 20: einen Ausschnitt aus dem Werkzeugwechsler der fünften Ausführungsform in einer zweiten Position;
- Fig. 21: die Werkzeugmaschine der Fig. 1 mit dem Werkzeugwechsler der ersten Ausführungsform, wobei sich der Werkzeugwechsler in einer Spannmittelwechselstellung befindet;
- Fig. 22: den Werkzeugwechsler der ersten Ausführungsform in der Spannmittelwechselstellung;
- Fig. 23: die Werkzeugmaschine der Fig. 21 mit aus der Maschine ausgeschwenktem Spannmittel; und
- Fig. 24: einen Ausschnitt des Werkzeugwechslers der vierten Ausführungsform mit ausgeschwenktem Spannmittel.

### BESCHREIBUNG BEVORZUGTER AUSFÜHRUNGSFORMEN

### Definitionen

*Verzahnmaschine:* Eine Maschine, die für die Erzeugung oder Bearbeitung von Verzahnungen an Werkstücken ausgebildet ist, insbesondere von Innen- oder Aussenverzahnungen an Zahnrädern. Beispielsweise kann es sich dabei um eine Feinbearbeitungsmaschine handeln, mit der vorverzahnte Werkstücke bearbeitet werden, insbesondere um eine Hartfeinbearbeitungsmaschine, mit der vorverzahnte Werkstücke nach einem Härteverfahren bearbeitet werden.

*Wälzbearbeitung:* Eine Art der Verzahnungsbearbeitung, bei der ein Werkzeug auf einem Werkstück abwälzt und dabei eine Schnittbewegung erzeugt. Es sind verschiedene Wälzbearbeitungsverfahren bekannt, wobei zwischen Verfahren mit geometrisch unbestimmter Schneide wie Wälzschleifen oder Wälzhonen und Verfahren mit geometrisch bestimmter Schneide wie Wälzfräsen, Wälzschälen, Wälzschaben oder Wälzstossen unterschieden wird.

*Wälzschälen (engl. gear skiving oder hob peeling):* Beim Wälzschälverfahren handelt es sich um ein kontinuierliches spanabhebendes Verfahren zur Herstellung achssymmetrischer periodischer Strukturen, bei dem zahnradförmige Werkzeuge verwendet werden. Ein Wälzschälwerkzeug ("Schälrad") besitzt an seiner Stirnfläche eine Vielzahl von Schneiden. Werkzeug und Werkstück werden auf Rotationsspindeln aufgenommen. Die Drehachsen von Werkzeug und Werkstück sind windschief zueinander angeordnet. Durch eine Kopplung der Drehbewegungen von Werkzeug und Werkstück um die Drehachsen wird die verfahrenstypische Wälzbewegung realisiert. Durch diese Wälzbewegung und eine axiale Vorschubbewegung des Werkzeugs oder des Werkstücks entlang der Werkstückachse wird beim Wälzschälen eine Schnittbewegung erzeugt. Mit diesem Verfahren können sowohl Aussen- als auch Innenverzahnungen bearbeitet werden.

*Kombinierte Hub- und Schwenkbewegung des Schwenkarms:* Dieser Begriff soll zum Ausdruck bringen, dass sowohl eine Hubbewegung (mit Hilfe des Hubschlittens) als auch eine Schwenkbewegung des Schwenkarms erfolgt. Diese Bewegungen können, müssen aber nicht simultan stattfinden. Sie können auch nacheinander ausgeführt werden, gegebenenfalls in mehreren Iterationen von abwechselnden Hub- und Schwenkbewegungen.

### Werkzeugmaschine mit Werkzeugwechsler gemäss einer ersten Ausführungsform

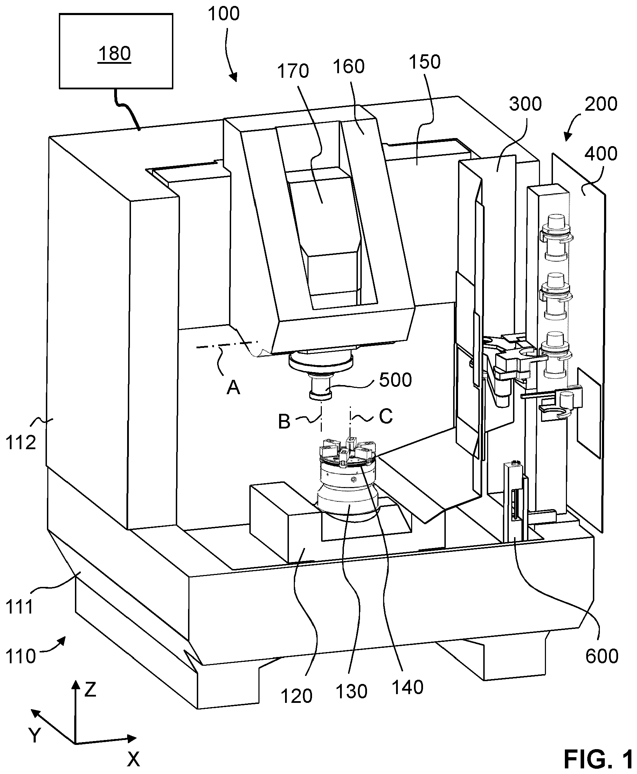

Die Figur 1 zeigt beispielhaft eine Werkzeugmaschine 100 mit einem Werkzeugwechsler 200 gemäss einer ersten Ausführungsform der vorliegenden Erfindung.

Bei der dargestellten Werkzeugmaschine 100 handelt es sich um eine Verzahnmaschine, die sich in besonderer Weise für das Wälzschälverfahren eignet. Es ist aber auch möglich, andere Bearbeitungsarten mit einer solchen Maschine auszuführen, insbesondere andere Wälzbearbeitungsverfahren. In der Fig. 1 ist die Maschine nur stark schematisch dargestellt. Für Details einer möglichen konkreten Ausführung der Maschine wird auf das Dokument CH715794B1 verwiesen.

Im Folgenden sollen lediglich einige wesentliche Eigenschaften der Maschine erläutert werden, die das Verständnis der Arbeitsweise des anschliessend erläuterten Werkzeugwechslers 200 erleichtern.

Die Maschine weist ein Maschinenbett 110 auf. Das Maschinenbett 110 ist im Seitenriss etwa L-förmig, mit einem horizontalen Abschnitt 111 und einem vertikalen Abschnitt 112. Am horizontalen Abschnitt 111 ist ein Y-Schlitten 120 angeordnet. Dieser ist mit Hilfe eines nicht zeichnerisch dargestellten Antriebs entlang einer Y-Richtung gegenüber dem Maschinenbett 110 verschiebbar. Die Y-Richtung verläuft horizontal im Raum.

Der Y-Schlitten 120 trägt eine Werkstückspindel 130 mit einem Werkstückspannmittel 140, mit dem ein nicht zeichnerisch dargestelltes Werkstück auf der Werkstückspindel 130 aufgespannt werden kann. Der Y-Schlitten 120 dient also als Werkstückträger.

Das Spannmittel 140 ist derart an der Werkstückspindel 130 angebracht, dass es von der Werkstückspindel 130 zu einer Drehung um eine Werkstückachse, der sogenannten C-Achse, angetrieben werden kann. Die C-Achse verläuft vertikal im Raum, d.h. entlang der Schwerkraftrichtung. Die C-Achse und die Y-Richtung spannen gemeinsam eine zentrale Mittenebene der Maschine auf. Die Mittenebene enthält die C-Achse, unabhängig von der Position des Y-Schlittens 120 entlang der Y-Richtung.

Am vertikalen Abschnitt 112 des Maschinenbetts 110 ist ein Z-Schlitten 150 angeordnet. Dieser ist mit Hilfe eines nicht zeichnerisch dargestellten Antriebs entlang einer Z-Richtung gegenüber dem Maschinenbett 110 verschiebbar. Die Z-Richtung verläuft hier vertikal im Raum, parallel zur C-Achse und senkrecht zur Y-Richtung.

Auf dem Z-Schlitten 150 ist ein X-Schlitten 160 angeordnet, der eine Werkzeugspindel 170 trägt und insofern einen Werkzeugträger bildet. Der X-Schlitten 160 ist mit Hilfe eines nicht zeichnerisch dargestellten Antriebs entlang einer X-Richtung gegenüber dem Z-Schlitten 150 verschiebbar. Die X-Richtung verläuft hier horizontal im Raum, senkrecht zur Z-Richtung und zur Y-Richtung und somit senkrecht zur Mittenebene. Gemeinsam bilden der Z-Schlitten 150 und der X-Schlitten 160 einen Kreuzschlitten, der Verschiebungen der darauf montierten Werkzeugspindel 170 entlang der zueinander senkrechten Z- und X-Richtungen ermöglicht.

Die Werkzeugspindel 170 treibt ein auf ihr aufgespanntes Werkzeug 500, z.B. ein Wälzschälwerkzeug, zu einer Drehung um eine Werkzeugachse, der sogenannten B-Achse, an. Dazu ist das Werkzeug 500 mit einem Werkzeughalter versehen, der zur Verbindung mit der Werkzeugspindel z.B. einen Kegel-Hohlschaft nach DIN 69893-1:2011-04 oder DIN 69893-6:2003-05 aufweisen kann. Mit Hilfe des Werkzeughalters ist das Werkzeug 500 in einem Spannmittel der Werkzeugspindel 170 eingespannt.

Die Werkzeugspindel 170 ist mit Hilfe eines nicht zeichnerisch dargestellten Antriebs gegenüber dem X-Schlitten 160 um die sogenannte A-Achse schwenkbar. Die A-Achse verläuft senkrecht zur B-Achse, parallel zur X-Achse und senkrecht zur Mittenebene. Die A-Achse schneidet die B-Achse. Die Schwenkebene, in der die B-Achse verschwenkt wird, verläuft parallel zur Mittenebene.

Eine Steuereinrichtung 180 dient zur Steuerung der Maschine. Insbesondere steuert die Steuereinrichtung 180 den Schwenkantrieb um die Achse A, die Spindelantriebe für die Werkzeug- und Werkstückachsen B und C, und die Antriebe für die Linearverschiebungen entlang der Richtungen X, Y und Z. Die Steuereinrichtung 180 wirkt mit einer nicht zeichnerisch dargestellten Bedientafel zusammen, die es einem Bediener ermöglicht, Steuerbefehle in die Steuereinrichtung 180 einzugeben und Zustandsmeldungen zu erhalten.

Für eine mögliche Ausgestaltung der Antriebe und Führungen für die Bewegungen des Y-Schlittens 120, des Z-Schlittens 150 und des X-Schlittens 160 und für die Schwenkbewegung der Werkzeugspindel 170 um die A-Achse sowie für weitere konstruktive Details wird auf das Dokument CH715794B1 verwiesen.

### Bearbeitung eines Werkstücks

Um mit einer Maschine nach Fig. 1 ein Werkstück zu bearbeiten, wird zunächst der Y-Schlitten 120 entgegen der Y-Richtung in eine Werkstückwechselposition gebracht. In dieser Position wird manuell oder mit Hilfe eines zeichnerisch nicht dargestellten Werkstückladers das zuletzt fertig bearbeitete Werkstück vom Spannmittel 140 entfernt und ein zu bearbeitendes Rohteil auf das Spannmittel 140 aufgelegt und gespannt. Sodann wird der Y-Schlitten 120 entlang der Y-Richtung in eine Bearbeitungsposition gebracht. Wenn es sich beim Rohteil um ein vorverzahntes Werkstück handelt, werden mit einer zeichnerisch nicht dargestellten Einzentriervorrichtung die Zahnlücken des Rohteils vermessen, um die Winkellage dieser Zahnlücken zu bestimmen. Anschliessend werden der Z-Schlitten 150 und der X-Schlitten 160 in eine Stellung gebracht, in der das Werkzeug 500 in Eingriff mit dem Rohteil gelangt. Dabei befindet sich die Werkzeugspindel 170 in einer Winkelstellung um die A-Achse, die u.a. vom Schrägungswinkel des Werkstücks abhängt. Nun erfolgt die Wälzbearbeitung des Rohteils in der üblichen Weise. Dabei rotieren das Werkzeug 500 und das Werkstück in einem definierten Drehzahlverhältnis. Diese Zwangskopplung erfolgt elektronisch durch die Steuereinrichtung 180. Durch Bewegungen des Z-Schlittens 150 wird ein axialer Vorschub entlang der Werkstückachse realisiert. Durch Bewegungen des X- und/oder Y-Schlittens kann die radiale Zustellung des Werkzeugs relativ zur Werkstückachse verändert werden. Auch die Steuerung dieser Bewegungen erfolgt durch die die Steuereinrichtung 180.

Nach einiger Zeit sind die Schneidkanten des Werkzeugs 500 so weit verschlissen, dass das Werkzeug 500 gegen ein frisch nachgeschärftes Werkzeug ausgewechselt werden muss. Hierzu dient der nachstehend beschriebene Werkzeugwechsler 200.

### Aufbau des Werkzeugwechslers

### Werkzeugmagazin und Werkzeugbestückungsplatz

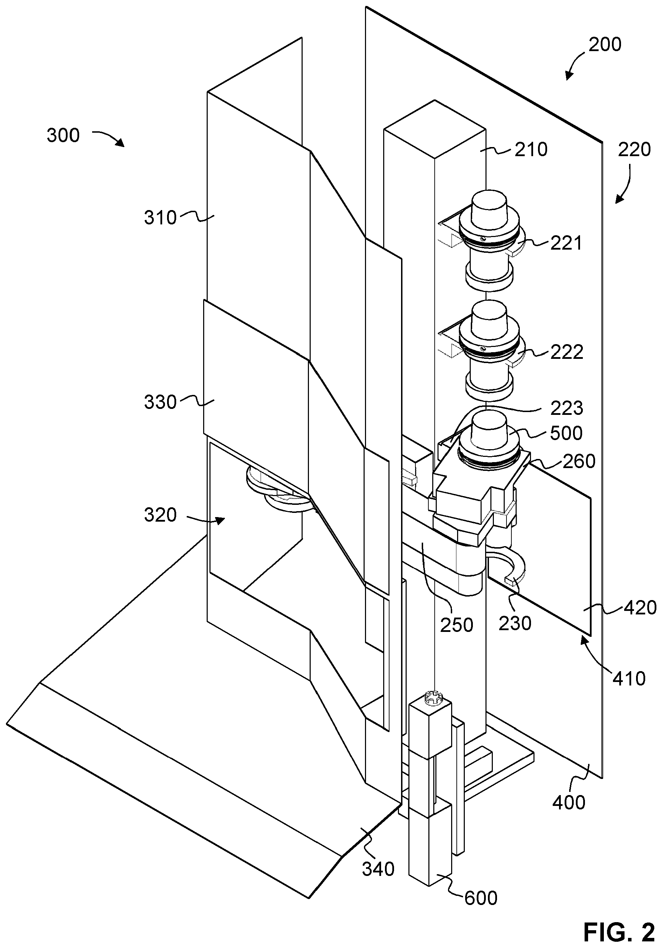

Der Werkzeugwechsler 200 der Maschine 100 ist in der Fig. 2 alleine dargestellt. Er weist eine Tragstruktur in Form einer vertikalen Säule 210 auf, an der mehrere (hier drei) Werkzeugaufnahmen 221, 222, 223 übereinander starr angeordnet sind. Diese unbeweglichen Werkzeugaufnahmen werden im Folgenden auch als "Werkzeugspeicherplätze" bezeichnet.

Unterhalb der untersten unbeweglichen Werkzeugaufnahme 223 ist eine weitere Werkzeugaufnahme 230 angeordnet. Diese Werkzeugaufnahme ist gegenüber der Säule 210 horizontal beweglich, insbesondere horizontal verschiebbar und um eine vertikale Achse verschwenkbar. Die bewegliche Werkzeugaufnahme 230 dient zur Übergabe von Werkzeugen zwischen dem Innenraum des Werkzeugwechslers 200 und dem Aussenraum. Sie wird im Folgenden auch als "Werkzeugbestückungsplatz" bezeichnet.

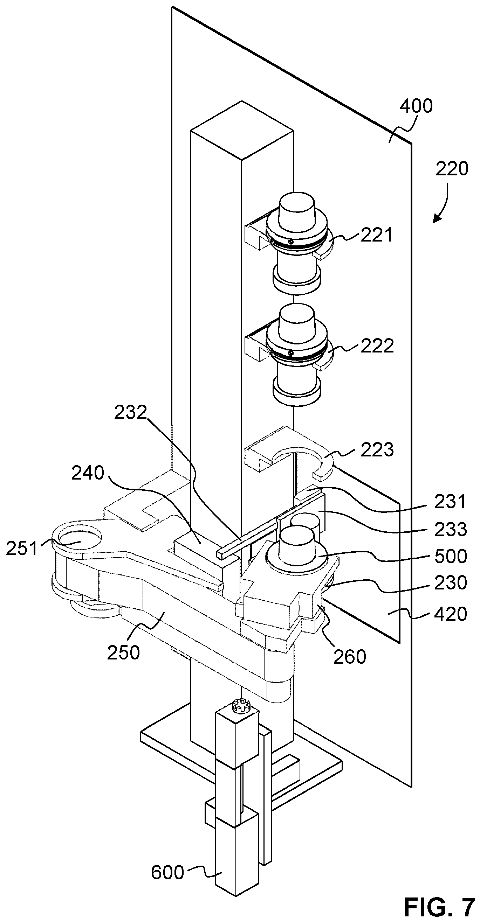

Aufbau und Funktion des Werkzeugbestückungsplatzes werden nachstehend im Zusammenhang mit den Figuren 7, 8 und 9A bis 9D näher erläutert. Selbstverständlich kann der Werkzeugbestückungsplatz auch an einer Position zwischen den unbeweglichen Werkzeugaufnahmen angeordnet werden, damit er sich in einer für den Bediener ergonomischen Höhe befindet.

Jede der Werkzeugaufnahmen 221, 222, 223 und 230 ist dazu ausgebildet, jeweils ein Werkzeug 500 aufzunehmen. Dazu weisen die Werkzeugaufnahmen eine Form auf, die zur Form eines entsprechenden Bereichs des Werkzeugs komplementär ist. Im vorliegenden Beispiel sind die Werkzeugaufnahmen als horizontale Platten mit einer ungefähr halbkreisförmigen Ausnehmung ausgebildet. Diese Ausnehmung nimmt einen kreiszylindrischen Werkzeugbereich mit reduziertem Durchmesser auf. Ein darüber gelegener Bund des Werkzeughalters mit grösserem Durchmesser bildet eine ringförmigen Auflagefläche, mit der das Werkzeug auf dem die Ausnehmung umgebenden Bereich der Platte aufliegt. Selbstverständlich ist aber auch eine andere Form der Werkzeugaufnahmen denkbar.

Ein nicht zeichnerisch dargestellter Positionssensor an jeder Werkzeugaufnahme 221, 222, 223 und 230 erkennt, ob in der betreffenden Werkzeugaufnahme ein Werkzeug 500 abgelegt wurde, und meldet dies an die Steuereinrichtung 180. Bei dem Positionssensor kann es sich z.B. um einen einfachen mechanischen Schalter handeln, der durch ein Werkzeug, das in der betreffenden Werkzeugaufnahme abgelegt ist, betätigt wird. Im Beispiel der Fig. 2 sind die drei unbeweglichen Werkzeugaufnahmen (die Werkzeugspeicherplätze) mit jeweils einem Werkzeug 500 belegt, während die bewegliche Werkzeugaufnahme 230 (der Werkzeugbestückungsplatz) unbelegt ist.

Die Werkzeugaufnahmen 221, 222, 223 und 230 bilden ein Werkzeugmagazin 220, um eine begrenzte Zahl von Werkzeugen (hier maximal vier Werkzeuge) unmittelbar in der Maschine 100 bereitzuhalten.

### Schott

Ein Schott 300 trennt den Werkzeugwechsler 200 vom Bearbeitungsraum der Werkzeugmaschine 100. Das Schott 300 dient dazu, den Innenraum des Werkzeugwechslers 200 vom Bearbeitungsraum der Werkzeugmaschine 100 zu trennen und dadurch den Innenraum des Werkzeugwechslers 200 vor einer Verschmutzung durch Kühlschmiermittel und/oder Späne zu schützen.

Das Schott 300 umfasst eine vertikal verlaufende Schottwand 310. An das untere Ende der Schottwand 310 schliesst sich eine schräg nach unten in den Bearbeitungsraum der Werkzeugmaschine 100 ragende Schürze 340 an, über die Kühlschmiermittel und/oder Späne in Richtung eines nicht dargestellten Späneförderers auf der Unterseite des Maschinenbetts 110 abfliessen können. In der vertikalen Schottwand 310 ist eine Schottöffnung 320 ausgebildet, die durch eine vertikal verschiebbare Schotttür 330 verschliessbar ist. Zur Erzeugung der Öffnungs- und Schliessbewegung dient ein zeichnerisch nicht dargestellter Antrieb, z.B. ein pneumatischer Antrieb, wie er im Stand der Technik wohlbekannt ist. Die Steuerung dieses Antriebs erfolgt durch die Steuereinrichtung 180.

Ein Sicherheitsschalter meldet den Zustand der Schotttür 330 (offen/geschlossen) an die Steuereinrichtung 180. Dies verhindert, dass in der Werkzeugmaschine ein Werkstück bearbeitet wird, während die Schotttür 330 geöffnet ist, und dass der Schwenkarm 250 durch die Schottöffnung 320 bewegt wird, wenn die Schotttür 330 geschlossen ist.

### Aussenwand mit Werkzeugbestückungstür

Auf der dem Schott 300 gegenüberliegenden Seite des Werkzeugmagazins ist eine Aussenwand 400 angeordnet, die den Werkzeugwechsler 200 seitlich vom Aussenraum trennt. In der Aussenwand 400 ist eine Werkzeugbestückungsöffnung 410 ausgebildet, die von einer Werkzeugbestückungstür 420 verschliessbar ist. Die Werkzeugbestückungstür 420 ist im vorliegenden Beispiel schwenkbar an der Aussenwand 400 angebracht. Sie wird im vorliegenden Beispiel manuell geöffnet und geschlossen.

Die Aussenwand 400 begrenzt die Maschine 100 seitlich zum Aussenraum hin. Die Werkzeugbestückungstür 420 dient zum Schutz des Bedieners der Maschine 100 vor Verletzungen durch sich bewegende Teile des Werkzeugwechslers 200. Die Werkzeugbestückungstür 420 kann insbesondere mit einem Zustandsmelder ausgestattet sein, der den Zustand der Werkzeugbestückungstür 420 (offen oder geschlossen) an die Steuereinrichtung 180 meldet. Die Steuerung 180 stellt sicher, dass die beweglichen Teile des Werkstückwechslers keine Bewegungen ausführen, solange die Werkzeugbestückungstür 420 offen ist, und verhindert andernfalls ein Öffnen der Werkzeugbestückungstür 420.

### RFID-Station

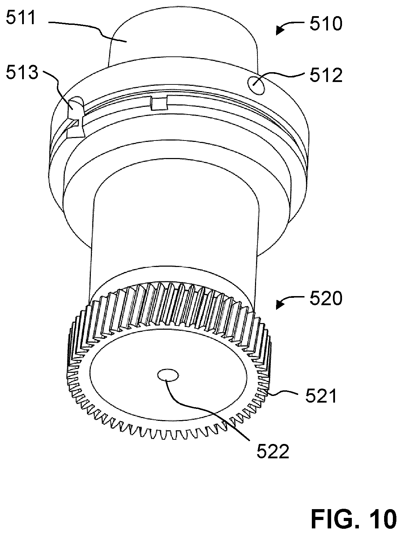

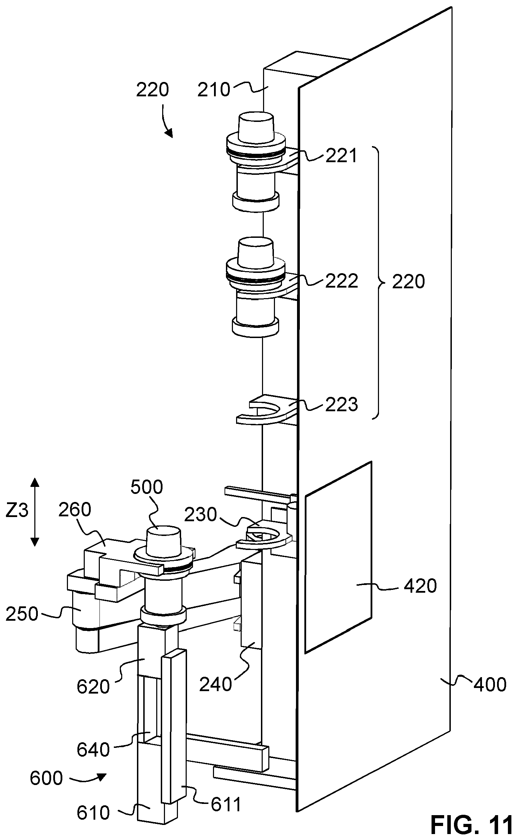

Im Bereich zwischen dem Schott 300 und der Aussenwand 400 befindet sich, vor Kühlschmiermittel und Spänen geschützt, eine RFID-Station 600. Aufbau und Funktion der RFID-Station 600 werden nachstehend in Zusammenhang mit den Figuren 10 und 11 näher erläutert.

### Schwenkarm auf Z3-Schlitten

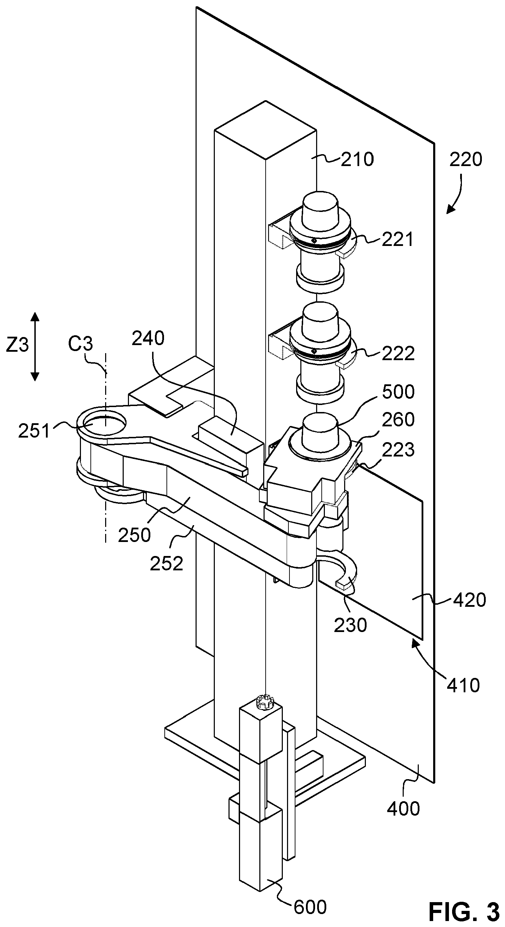

In der Fig. 3 ist der Werkzeugwechsler 200 ohne das Schott 300 dargestellt. In dieser Figur erkennt man weitere Komponenten des Werkzeugwechslers, die in der Fig. 2 durch die Schottwand 310 verdeckt sind.

Insbesondere erkennt man einen Hubschlitten 240, der an der Säule 210 vertikal verschiebbar geführt ist. Dieser Hubschlitten wird im Folgenden auch als "Z3-Schlitten" bezeichnet. Der Z3-Schlitten 240 trägt einen Schwenkarm 250, der über ein Schwenklager 251 um eine vertikale Achse verschwenkbar ist. Diese Achse wird im Folgenden auch als "C3-Achse" bezeichnet. Die C3-Achse verläuft beabstandet zur Säule 210 in einem Bereich, der zwischen der Säule 210 und dem Bearbeitungsraum der Maschine 100 bzw. zwischen der Säule 210 und dem Schott 300 gelegen ist.

Am freien Ende des Schwenkarms 250 ist ein nur schematisch dargestellter Werkzeuggreifer 260 angebracht. Der Werkzeuggreifer ermöglicht es, ein Werkzeug 500, das in einer der Werkzeugaufnahmen 221, 222, 223, 230 abgelegt ist, zu ergreifen und zu einem anderen Ort zu bewegen. Dazu weist der Werkzeuggreifer zwei in Fig. 3 nicht einzeln dargestellte Greiferbacken auf, die gegeneinander beweglich sind und mit denen der Werkzeuggreifer den Werkzeughalter des Werkzeugs 500 an seinem Bund ergreift.

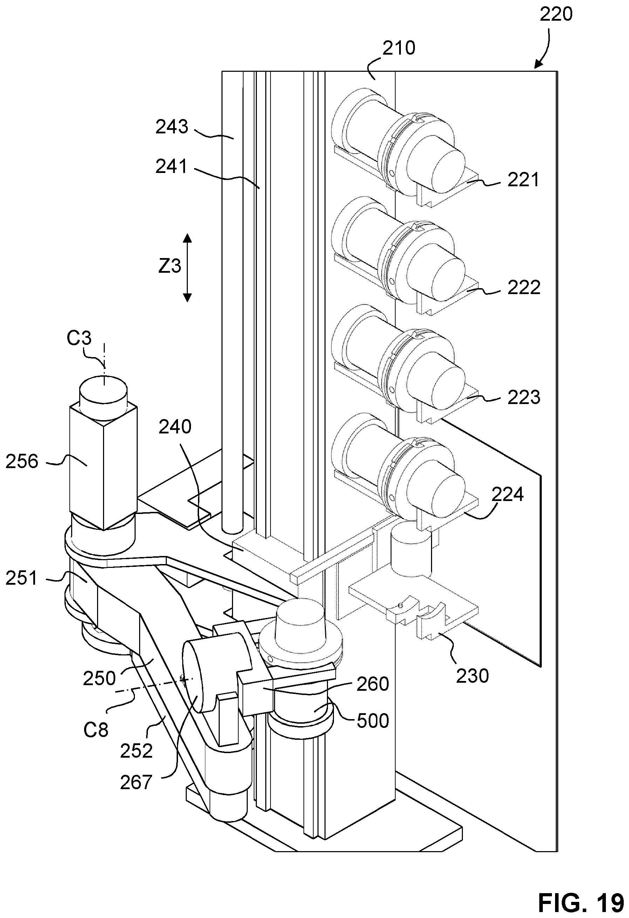

Unterhalb des Schwenkarms 250 befindet sich ein Zusatzarm 252, dessen Funktion nachstehend in Zusammenhang mit den Figuren 19 bis 22 näher erläutert wird. Der Zusatzarm 252 ist im Normalbetrieb funktionslos und mit dem Schwenkarm 250 in einer Ruhestellung verriegelt.

### Betrieb des Werkzeugwechslers

Anhand der Figuren 1 bis 13 wird nun der Betrieb des Werkzeugwechslers 200 näher erläutert.

### Zwischenstellung (Fig. 1)

In der Fig. 1 befinden sich der Z3-Schlitten 240 und der Schwenkarm 250 in einer Zwischenstellung, wie sie typischerweise beim Betrieb des Werkzeugwechslers eingenommen werden kann. In dieser Stellung befinden sich der Schwenkarm 250 und der Greifer 260 vollständig innerhalb des Innenraums des Werkzeugwechslers, der vom Schott 300 und der Aussenwand 400 begrenzt wird. Die Schotttür 330 kann in dieser Stellung geschlossen werden, um den Werkzeugwechsler vor Verschmutzung während der Bearbeitung von Werkstücken auf der Werkzeugmaschine 100 zu schützen.

### Entnahme eines Werkzeugs aus dem Werkzeugmagazin (Figuren 2 bis 4)

Um ein Werkzeug aus einer der Werkzeugaufnahmen 221, 222, 223 oder 230 zu entnehmen, wird der Werkzeuggreifer 260 mit Hilfe des Schwenkarms 250 und des Z3-Schlittens 240 zum betreffenden Werkzeug 500 bewegt. Dies ist in den Figuren 2 bis 4 für die unterste unbewegliche Werkzeugaufnahme illustriert. Der Werkzeuggreifer 260 ergreift das betreffende Werkzeug. Der Schwenkarm 250 wird danach leicht angehoben und so weit in Richtung der Schottwand 310 ausgeschwenkt, dass sich das Werkzeug vertikal über der RFID-Station 600 befindet. In dieser Stellung kann der Schwenkarm 250 mit dem Werkzeuggreifer 260 und dem darin gehaltenen Werkzeug durch eine Bewegung des Z3-Schlittens 240 kollisionsfrei entlang der Z3-Richtung auf und ab bewegt werden. Die Schotttür 330 kann währenddessen geschlossen bleiben.

Das Werkzeug kann anschliessend durch entsprechende Bewegungen des Z3-Schlittens 240 und des Schwenkarms 250 in einer anderen Werkzeugaufnahme abgelegt werden, zur RFID-Station 600 bewegt werden oder zur Werkzeugspindel 170 bewegt werden.

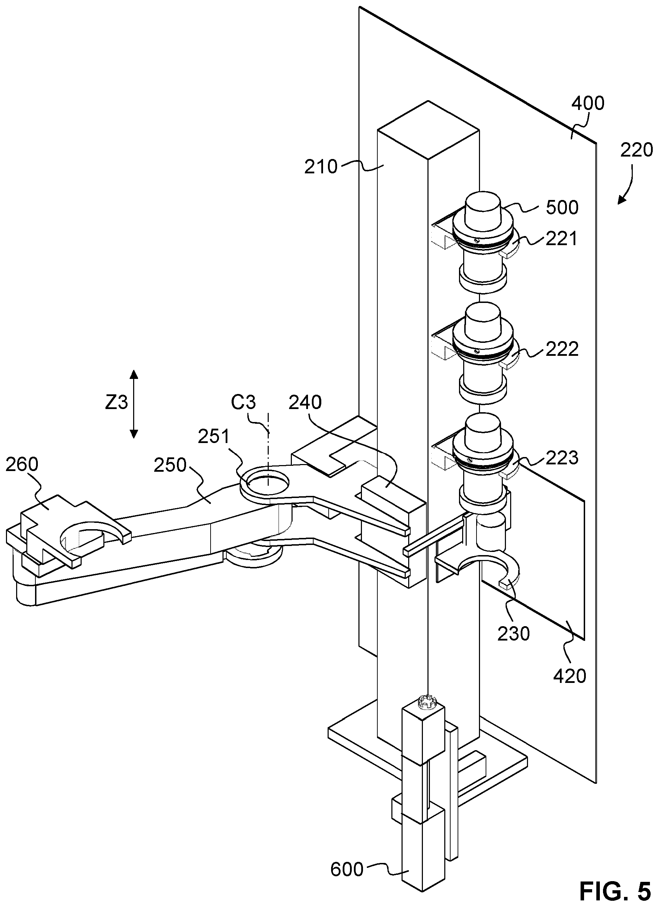

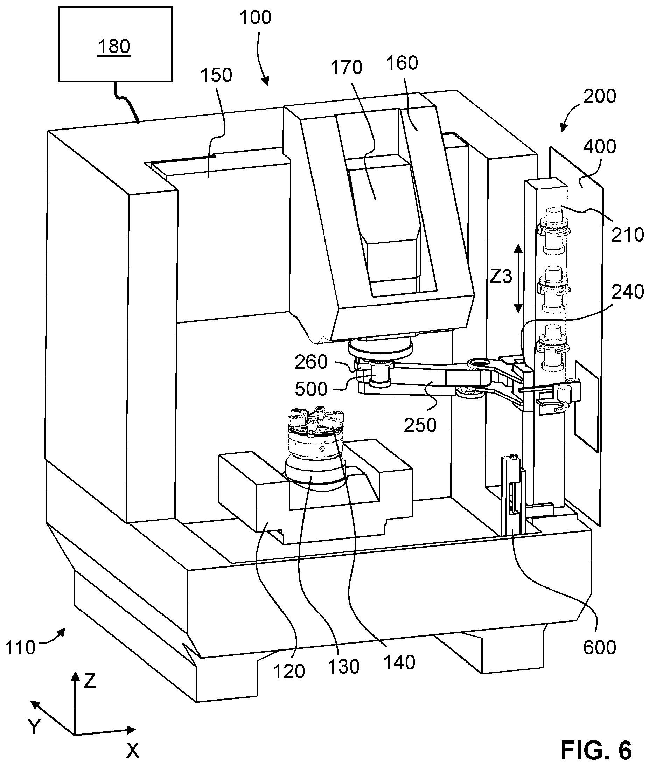

### Überführung zur Werkzeugspindel (Figuren 5 und 6)

Um ein Werkzeug 500 zur Werkzeugspindel 170 zu bewegen, wird das betreffende Werkzeug wie zuvor beschrieben aus einer der Werkzeugaufnahmen entnommen und mit Hilfe des Z3-Schlittens 240 in eine Position gebracht, in der es sich direkt hinter der Schotttür 330 befindet. Die Schotttür 330 wird geöffnet, und der Schwenkarm 250 wird durch die Schottöffnung 320 hindurch in den Bearbeitungsraum der Werkzeugmaschine 100 geschwenkt, bis sich das am Schwenkarm 250 gehaltene Werkzeug 500 direkt unterhalb der Werkzeugspindel 170 befindet. Die Werkzeugspindel 170 wurde dazu zuvor mit Hilfe des Z-Schlittens 150 und des X-Schlittens 160 in eine entsprechende Stellung gebracht und um die A-Achse in eine vertikale Orientierung geschwenkt. Die resultierende Stellung der Werkzeugspindel 170, des Z3-Schlittens 240 und des Schwenkarms 250 ist in den Figuren 5 und 6 illustriert. Sie wird im Folgenden auch als "Aufspannstellung" bezeichnet.

Durch eine Bewegung des Z-Schlittens 150 und/oder des Z3-Schlittens 240 wird das Werkzeug 500 nun derart relativ zur Werkzeugspindel 170 positioniert, dass es mit Hilfe eines nicht zeichnerisch dargestellten Werkzeugspannmittels auf der Werkzeugspindel 170 aufgespannt werden kann.

Nachdem das Werkzeug auf der Werkzeugspindel 170 aufgespannt wurde, wird der Werkzeuggreifer 260 geöffnet, und der Schwenkarm 250 wird in Richtung der Rückseite der Maschine geschwenkt. Die Werkzeugspindel 170 wird nun mit dem X-Schlitten 160 aus dem Kollisionsbereich mit dem Schwenkarm 250 entfernt. Nun kann der Schwenkarm 250 kollisionsfrei wieder zurück in den Innenraum des Werkzeugwechslers 200 geschwenkt werden. Die Schotttür 330 wird anschliessend wieder verschlossen. Nun kann mit dem neu aufgespannten Werkzeug 500 die Bearbeitung von Werkstücken erfolgen.

Um das Werkzeug 500 wieder von der Werkzeugspindel 170 zu entfernen und in das Werkzeugmagazin 220 zu bewegen, wird dieser Vorgang in umgekehrter Richtung ausgeführt.

### Bestückung des Werkzeugmagazins mit neuem Werkzeug (Figuren 7, 8 und 9A bis 9D)

In den Figuren 7, 8 und 9A bis 9D sind die Übergabe eines Werkzeugs in den Aussenraum der Maschine und die Bestückung des Werkzeugmagazins mit einem neuen Werkzeug illustriert. Um ein Werkzeug 500 aus dem Innenraum des Werkzeugwechslers 200 in den Aussenraum zu übergeben, wird das betreffende Werkzeug durch entsprechende Bewegungen des Z3-Schlittens 240 und des Schwenkarms 250 auf der beweglichen Werkzeugaufnahme 230 (dem "Werkzeugbestückungsplatz") abgelegt. Die Werkzeugbestückungstür 420 ist währenddessen geschlossen. Diese Situation ist in der Fig. 7 illustriert. Die entsprechende Stellung des Z-Schlittens 240 und des Schwenkarms 250 wird im Folgenden auch als "Übergabestellung" bezeichnet.

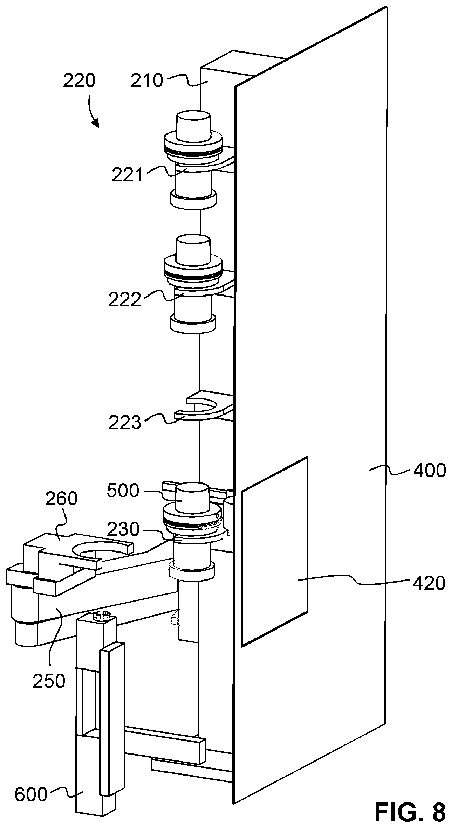

Der Werkzeuggreifer 260 wird nun geöffnet, und der Schwenkarm 250 wird vom betreffenden Werkzeug 500 weg geschwenkt. Die bewegliche Werkzeugaufnahme 230 befindet sich in ihrer Grundstellung, in der sie vertikal exakt unterhalb der unbeweglichen Werkzeugaufnahmen 221, 222, 223 angeordnet ist. Diese Situation ist in der Fig. 8 illustriert. Die nun vorliegende Stellung des Schwenkarms 250 und der Werkzeugaufnahme 230 dient auch als Parkstellung, die der Werkzeugwechsler in Betriebspausen einnimmt.

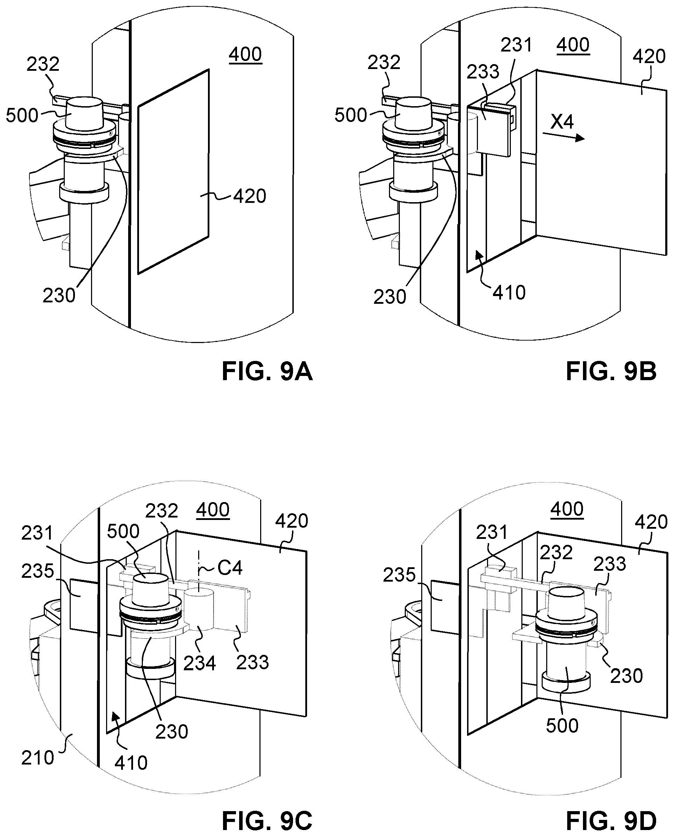

Die Figuren 9A bis 9D illustrieren, wie die bewegliche Werkzeugaufnahme 230 von dieser Grundstellung in eine Bestückungsstellung bewegt wird. In diesen Figuren ist jeweils der gleiche Ausschnitt des Werkzeugwechslers gezeigt.

In der Fig. 9A befindet sich die bewegliche Werkzeugaufnahme 230 in ihrer Grundstellung, und die Werkzeugbestückungstür 420 ist geschlossen.

Die Werkzeugbestückungstür 420 wird nun geöffnet, so dass sie die Werkzeugbestückungsöffnung 410 freigibt. Die bewegliche Werkzeugaufnahme 230 befindet sich nach wie vor in ihrer Grundstellung Dies ist in der Fig. 9B illustriert. Man erkennt in dieser Figur ausserdem, auf welche Weise die bewegliche Werkzeugaufnahme 230 gegenüber der Säule 210 beweglich ist. Über einen Halter 235 (siehe Fig. 9C) ist eine Linearführung 231 starr mit der Säule 210 verbunden. Diese Linearführung wird im Folgenden auch als Bestückungslinearführung oder X4-Linearführung bezeichnet. In der X4-Linearführung 231 ist eine Laufschiene 232 entlang einer horizontalen Richtung X4 verschiebbar geführt. An der Laufschiene 232 ist eine Platte 233 montiert. Die Laufschiene 232 und die Platte 233 bilden gemeinsam einen Wagen, der in der X4-Linearführung 231 verschiebbar geführt ist und im Folgenden als Bestückungswagen bezeichnet wird. Die bewegliche Werkzeugaufnahme 230 ist über ein Schwenklager 234 schwenkbar an der Platte 233 angebracht. Das Schwenklager 234 definiert eine vertikal im Raum verlaufende Schwenkachse C4 (siehe Fig. 9C). Es wird daher auch als Bestückungsschwenklager bezeichnet. Das Bestückungsschwenklager 234 ermöglicht eine Schwenkbewegung der beweglichen Werkzeugaufnahme 230 gegenüber dem Bestückungswagen in einer horizontalen Schwenkebene.

Die Bestückungswagen mit der daran angebrachten beweglichen Werkzeugaufnahme 230 und dem Werkzeug 500 wird nun manuell durch die Werkzeugbestückungsöffnung 410 hindurch in den Aussenraum der Werkzeugmaschine gezogen. Die resultierende Zwischenstellung der beweglichen Werkzeugaufnahme 230 ist in der Fig. 9C illustriert. Die offene Seite der Ausnehmung in der beweglichen Werkzeugaufnahme 230 weist in dieser Zwischenstellung in Richtung des Inneren der Werkzeugmaschine.

Schliesslich wird die bewegliche Werkzeugaufnahme 230 zusätzlich manuell um die Bestückungsschwenkachse C4 verschwenkt, so dass die offene Seite der Ausnehmung in der beweglichen Werkzeugaufnahme 230 in Richtung des Bedieners weist. Die resultierende Werkzeugbestückungsstellung der Werkzeugaufnahme 230 ist in der Fig. 9D illustriert. Der Bediener kann in dieser Stellung das Werkzeug 500 ohne Weiteres entnehmen und ein neues Werkzeug in der Werkzeugaufnahme 230 ablegen.

Um den Werkzeugwechsler mit einem neuen Werkzeug zu bestücken, werden die vorstehend beschriebenen Schritte in umgekehrter Reihenfolge ausgeführt. Um dabei sicherzustellen, dass das Werkzeug in einer vorgegebenen Orientierung um seine Rotationsachse im Werkzeugwechsler aufgenommen wird, kann an der beweglichen Werkzeugaufnahme 230 ein Positionierelement vorhanden sein, das mit einer komplementären Struktur am Werkzeug zusammenwirkt. Beispielweise kann das Werkzeug eine Orientierungskerbe ("Deutsches Eck") nach DIN 69893-1:2011-4 aufweisen, und an der beweglichen Werkzeugaufnahme 230 kann ein dazu komplementärer Positionierstift vorhanden sein.

Nachdem die bewegliche Werkzeugaufnahme 230 mit dem neuen Werkzeug in den Innenraum des Werkzeugwechslers geschoben wurde, kann das neue Werkzeug in der zuvor beschriebenen Weise in eine der unbeweglichen Werkzeugaufnahmen 221, 222, 223 umgeschichtet werden. Bevorzugt wird das Werkzeug zuvor an der RFID-Station 600 erfasst, wie das nachstehend noch näher beschrieben wird.

Im vorstehenden Beispiel erfolgen die Bewegungen der beweglichen Werkzeugaufnahme 230 manuell. Es ist aber auch denkbar, diese Bewegungen mit Hilfe von entsprechenden Antrieben gesteuert auszuführen. Insbesondere ist es denkbar, einen automatischen Austausch von Werkzeugen zwischen der beweglichen Werkzeugaufnahme 230 und einem externen Magazin auszuführen. Ein externer Manipulator kann dazu ein Werkzeug aus der beweglichen Werkzeugaufnahme 230 entnehmen und diese mit einem neuen Werkzeug bestücken. Die Werkzeugbestückungstür 420 kann in diesem Fall entfallen.

Auch ist es denkbar, die bewegliche Werkzeugaufnahme 230 anders als im vorstehend geschilderten Beispiel zu gestalten. Beispielweise ist es denkbar, die bewegliche Werkzeugaufnahme 230 an einem Schwenkarm anzubringen und mit Hilfe des Schwenkarms durch die Werkzeugbestückungsöffnung 410 in den Aussenraum zu schwenken.

Die Werkzeugbestückungstür 420 kann, sofern vorhanden, statt als Schwenktür auch als Schiebetür ausgebildet sein.

### Erfassung eines Werkzeugs mit der RFID-Station (Figuren 10 und 11)

Das Werkzeug 500 kann mit einem RFID-Transponder versehen sein, wie das in der Fig. 10 dargestellt ist. Die Fig. 10 zeigt ein beispielhaftes Werkzeug 500. Das Werkzeug 500 umfasst einen Werkzeughalter 510. Am oberen Ende ist der Werkzeughalter 510 mit einem Kegel-Hohlschaft (HSK) 511 der Form A gemäss DIN 69893-1:2011-04 oder Form F gemäss DIN 69893-6:2003-05 versehen. Am Aussenumfang weist der Werkzeughalter 510 die schon erwähnte Orientierungskerbe 513 ("Deutsches Eck") nach DIN 69893-1:2011-4 auf. Am unteren Ende ist mit dem Werkzeughalter 510 ein Wälzschälrad 520 mit stirnseitigen Schneiden 521 verbunden. Werkzeughalter 510 und Wälzschälrad 520 bilden gemeinsam ein Werkzeug 500 im Sinne der vorliegenden Offenbarung.

Das Wälzschälrad 520 ist mit einem RFID-Transponder 522 ("RFID-Tag") versehen. Dieser befindet sich zentral auf der Unterseite des Wälzschälrads, radial innerhalb des Bereichs, in dem die Schneiden 521 des Wälzschälrads angeordnet sind. Mit diesem RFID-Transponder kann das Wälzschälrad eindeutig identifiziert werden, und optional können weitere Eigenschaften des Wälzschälrads in diesem Transponder gespeichert sein.

Um den RFID-Transponder 522 mit der RFID-Station 600 auszulesen, wird der Z3-Schlitten 240 so weit nach unten verfahren, bis das vom Werkzeuggreifer 260 gehaltene Werkzeug 500 die Oberseite der RFID-Station 600 berührt. Diese Situation ist in der Fig. 11 dargestellt. Diese Stellung des Z3-Schlittens 240 und des Schwenkarms 250 wird im Folgenden auch als "Erfassungsstellung" bezeichnet.

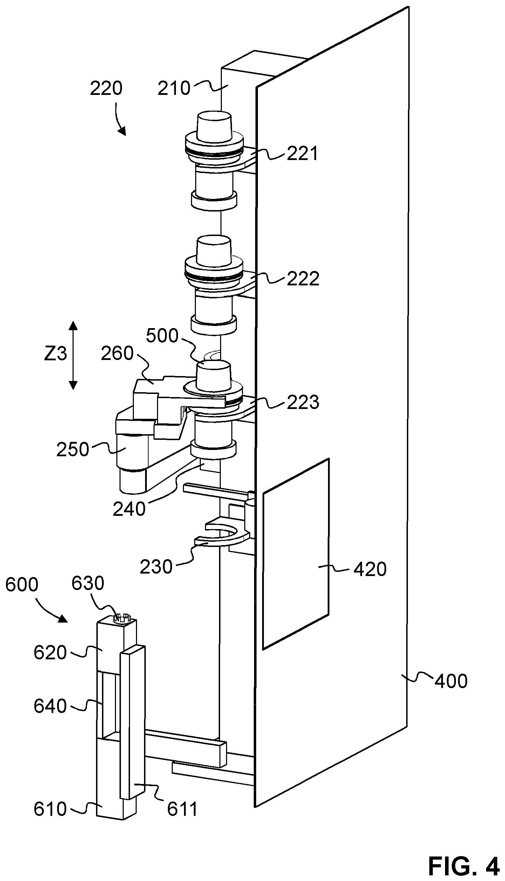

Die RFID-Station 600 trägt auf ihrer Oberseite einen RFID-Transceiver 630 (in Fig. 4 sichtbar, in Fig. 11 durch das Werkzeug verdeckt), der den RFID-Transponder 522 ausliest. Im RFID-Transponder 522 ist eine eindeutige Kennung des Wälzschälrads 520 abgespeichert. Diese wird vom RFID-Transceiver 630 ausgelesen und an die Steuereinrichtung 180 übermittelt. Die Steuereinrichtung 180 ruft unter Verwendung der eindeutigen Kennung verfahrensrelevante Eigenschaften des Wälzschälrads 520 aus einer Datenbank ab und verwendet diese Eigenschaften zur Steuerung des Bearbeitungsprozesses. Zu diesen Eigenschaften können beispielsweise gehören: Aufbau und geometrische Daten des Werkzeugs sowie Daten zur bisherigen Verwendung des Werkzeugs wie Zahl der erfolgten Nachschärfungen und Zahl der bearbeiteten Werkstücke seit der letzten Nachschärfung. Alternativ können diese Daten auch direkt im RFID-Transponder 522 gespeichert sein und ebenfalls vom RFID-Transceiver 630 ausgelesen werden. Der RFID-Transceiver 630 kann ausserdem dazu ausgebildet sein, Informationen auf den RFID-Transponder 522 zu schreiben.

Um eine Beschädigung des RFID-Transceivers 630 und des zugehörigen RFID-Transponders 522 zu verhindern, ist die RFID-Station 600 gefedert ausgeführt. Dazu ist der RFID-Transceiver 630 auf einer Transceiveraufnahme 620 angebracht, die über eine Führungsschiene 611 an einer Basis 610 vertikal verschiebbar geführt ist. Die Basis 610 ist ortsfest mit dem Maschinenbett 110 verbunden. Zwischen der Transceiveraufnahme 620 und der Basis 610 wirkt ein Federelement 640, das komprimiert wird, wenn sich die Transceiveraufnahme 620 an der Führungsschiene 611 nach unten bewegt. Das Federelement 640 erzeugt dadurch eine Rückstellkraft auf die Transceiveraufnahme 620. Vorzugsweise ist die Bewegung der Transceiveraufnahme 620 gegenüber der Basis 610 gedämpft, um Schwingungen zu vermeiden. Beispielsweise kann als Federelement 640 eine an sich bekannte Gasdruckfeder zum Einsatz kommen, die sowohl die Rückstellkraft als auch die Dämpfungswirkung erzeugt. Durch die gefederte Ausgestaltung der RFID-Station 600 wird es möglich, mit der der RFID-Station 600 unterschiedlich lange Werkzeuge auszulesen, ohne den RFID-Transceiver 630 oder den zugehörigen RFID-Transponder 522 zu beschädigen, selbst wenn die Länge der Werkzeuge nicht bekannt ist.

Die Erfassung eines Werkzeugs 500 mit der RFID-Station 600 erfolgt bevorzugt jeweils unmittelbar nach der Bestückung des Werkzeugwechslers mit einem neuen Werkzeug. Alternativ kann diese Erfassung auch erst vorgenommen werden, wenn ein Werkzeug zur Werkzeugspindel 170 überführt wird.

Ein weiterer RFID-Transponder 512 ist in einem Umfangsbereich des Werkzeughalters 510 angeordnet. Dieser befindet sich in einem Einbauraum für Datenträger, wie er in DIN 69893-1:2011-04 definiert wird. Mit diesem RFID-Transponder kann der Werkzeughalter eindeutig identifiziert werden, und optional können weitere Eigenschaften des Werkzeughalters in diesem Transponder gespeichert sein. Ein zweiter, nicht zeichnerisch dargestellter RFID-Transceiver kann zur zum Auslesen des RFID-Transponders 512 im Werkzeughalter 510 dienen. Dieser Transceiver kann in den Werkzeuggreifer 260 integriert sein oder benachbart zu diesem angeordnet sein, z.B. unterhalb des Werkzeuggreifers.

Durch die Informationen, die aus den beiden RFID-Transpondern 512 und 522 ausgelesen werden, lässt sich das Werkzeug 500 eindeutig identifizieren, und es kann überprüft werden, ob die korrekte Kombination aus Wälzschälrad 520 und Werkzeughalter 510 vorliegt.

Statt eines RFID-Transponders 512, 522 kann auch eine andere Art von maschinenlesbarem Datenträger am Werkzeughalter 510 und/oder am Wälzschälrad 520 vorgesehen sein, z.B. ein optisch auslesbarer Code. Dementsprechend kann statt einer RFID-Station eine entsprechend angepasste Lesestation vorgesehen sein, die z.B. statt eines RFID-Transceivers eine optische Lesevorrichtung für den Datenträger aufweist.

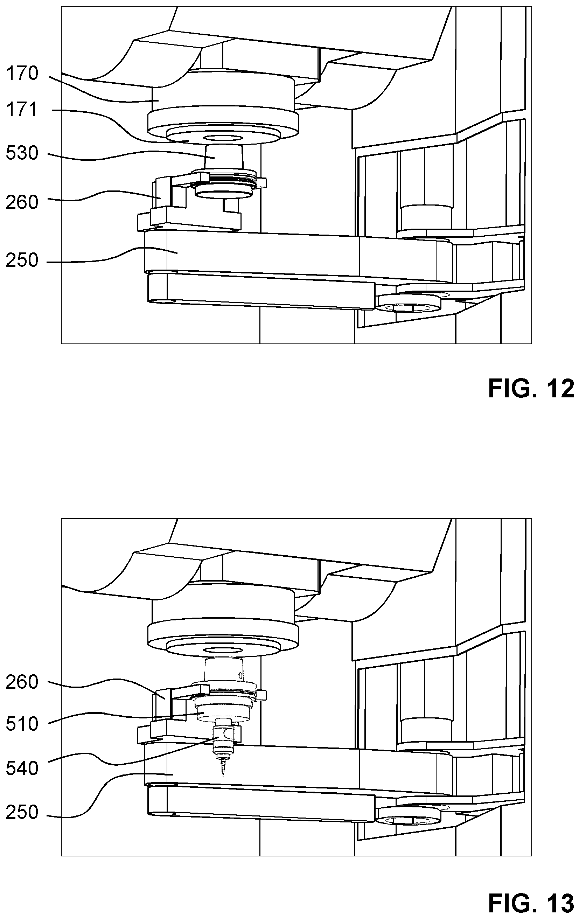

### Verwendung für andere Objekte (Figuren 12 und 13)

In den Figuren 12 und 13 ist illustriert, dass im Werkzeuggreifer 260 auch andere Objekte als Werkzeuge 500 aufgenommen werden können.

So ist im Beispiel der Fig. 12 im Werkzeuggreifer 260 ein Kegelreiniger 530 für eine Konusaufnahme 171 in der Werkzeugspindel 170 aufgenommen. Dabei kann es sich um einen handelsüblichen Kegelreiniger handeln, der auf einer passenden Schnittstelle zum Werkzeuggreifer 260 montiert ist. Der Kegelreiniger 530 wird mit dem Werkzeuggreifer 260 ergriffen und mit Hilfe des Schwenkarms 250 und des Z3-Schlittens 240 zur Werkzeugspindel 170 bewegt und in die sich langsam drehende Konusaufnahme eingeführt. Statt eines Kegelreinigers kann z.B . auch eine Bürste verwendet werden.

Im Beispiel der Fig. 13 ist im Werkzeuggreifer 260 ein Messtaster 540 aufgenommen. Dieser kann allgemeine Mess- und Prüffunktionen wahrnehmen. Er kann mit einem Mittel zur drahtlosen Signalübertragung ausgestattet sein. Beispielsweise kann mit dem Messtaster 540 eine Rund- und Planlaufmessung des Werkstückspannmittels 140 ausgeführt werden. Dazu wird der Messtaster 540 mit Hilfe des Schwenkarms 250 und des Z3-Schlittens 240 zum Werkstückspannmittel 140 bewegt. Alternativ kann der Messtaster 540 auch in die Werkzeugspindel 170 oder an einer andere Stelle der Werkzeugmaschine 100 eingesetzt werden.

Statt eines Kegelreinigers 530 oder eines Messtasters 540 können auch andere Objekte vom Werkzeuggreifer 260 ergriffen werden. Sie können bei Nichtgebrauch in einer der Werkzeugablagen abgelegt werden.

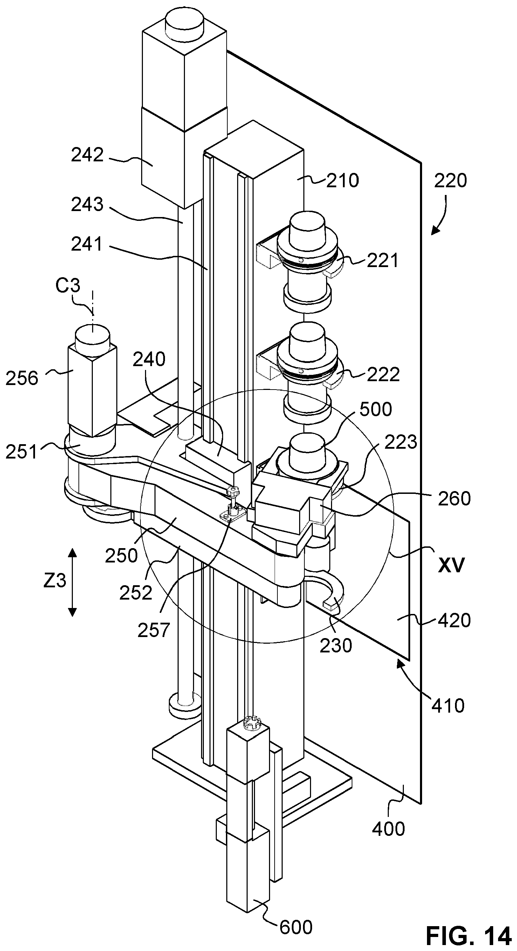

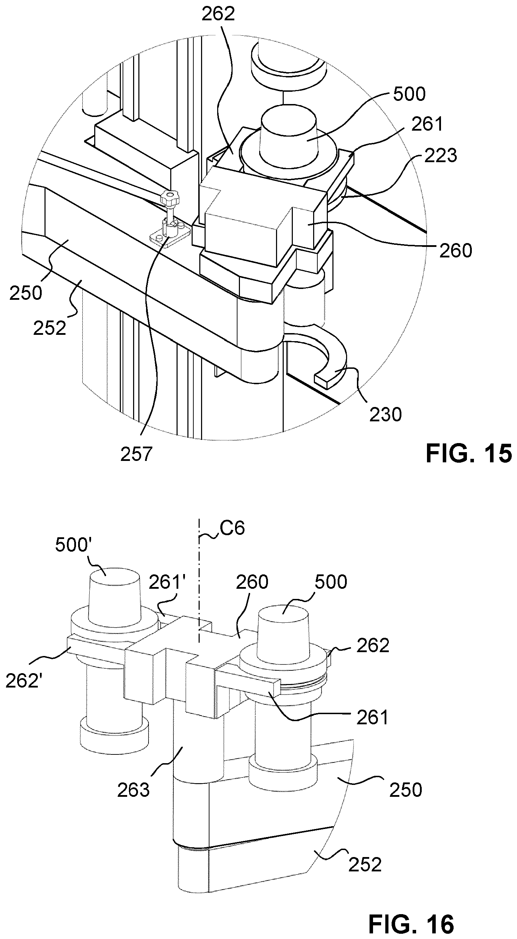

*Führung und Antrieb des Z3-Schlittens, Antrieb des Schwenkarms, Werkzeuggreifer, Verriegelung des Zusatzarms (**Figuren 14* *und* *15**)*

Aus Gründen der Übersichtlichkeit wurden in den Figuren 1-13 einige Komponenten des Werkzeugwechslers nicht dargestellt. In den Figuren 14 und 15 sind diese Komponenten illustriert.

Die Führung des Z3-Schlittens 240 erfolgt in an sich bekannter Weise durch zwei parallele Führungsschienen 241, die starr mit der Säule 210 verbunden sind. Der Antrieb des Z3-Schlittens erfolgt durch einen Hubschlittenantrieb 242. Dieser erzeugt eine Drehbewegung, die durch einen an sich bekannten Kugelgewindetrieb 243 in eine Hubbewegung des Z3-Schlittens 240 übertragen wird.

Die Schwenkbewegung des Schwenkarms 250 um die C3-Achse erfolgt mit Hilfe eines an sich bekannten Schwenkantriebs 256, der am Z3-Schlitten 240 angebracht ist.

Eine Verriegelung 257 sichert den Zusatzarm 252 am Schwenkarm 250. Diese Verriegelung kann z.B. als ein federbelasteter Stift ausgeführt sein, der sich in einer Verriegelungsstellung durch den Schwenkarm 250 hindurch in eine Öffnung des Zusatzarms 252 hinein erstreckt und in einer Freigabestellung soweit herausgezogen ist, dass er ein Verschwenken des Zusatzarms 252 gegenüber dem Schwenkarm 250 ermöglicht.

Der Werkzeuggreifer 260 ist in der Fig. 15 genauer erkennbar. Bei dem Werkzeuggreifer 260 handelt es sich um einen an sich bekannten Zweibackengreifer mit einem Paar von Greiferbacken 261, 262, die pneumatisch oder elektrisch aufeinander zu bewegbar sind, um ein Werkzeug zu ergreifen. Die Form der Greiferbacken 261, 262 ist dabei an die äussere Form des Werkzeugbereichs angepasst, der vom Werkzeuggreifer aufgenommen werden soll. Insbesondere können die Greiferbacken 261, 262 so ausgebildet sein, dass ein von ihnen ergriffenes Werkzeug formschlüssig gegen Herausfallen gesichert ist. Beispielsweise kann der Werkzeughalter 510 mit einem Kegel-Hohlschaft (HSK) der Form A gemäss DIN 69893-1:2011-04 oder der Form F nach DIN 69893-6:2003-05 versehen sein. Ein solcher Kegel-Hohlschaft weist einen Bund mit einer umlaufenden Greifnut auf. Die Greiferbacken können dann nach innen ragende Vorsprünge aufweisen, die in diese Greifnut eingreifen.

Die Antriebseinheit 242, der Schwenkantrieb 255 und der Werkzeuggreifer 260 werden von der Steuereinrichtung 180 (siehe Fig. 1) angesteuert.

Selbstverständlich sind auch andere Arten von Führungen, Antrieben, Greifern und Verriegelungen als im vorliegenden Beispiel denkbar.

### Zweite Ausführungsform (Fig. 16)

Eine zweite Ausführungsform eines Werkzeugwechslers ist in der Fig. 16 illustriert. Der Werkzeugwechsler der zweiten Ausführungsform unterscheidet sich vom Werkzeugwechsler der ersten Ausführungsform nur durch die Ausgestaltung des Werkzeuggreifers 260 und die Art und Weise, wie dieser am Schwenkarm 250 angebracht ist.

In der zweiten Ausführungsform ist der Werkzeuggreifer 260 als Doppelgreifer ausgebildet. Dazu weist der Werkzeuggreifer 260 zwei Paare von Greiferbacken 261, 262 bzw. 261', 262' auf. Das Greiferbackenpaar 261', 262' erstreckt sich in die entgegengesetzte Richtung des Greiferbackenpaars 261, 262. Der Werkzeuggreifer 260 ist am freien Ende des Schwenkarms 250 an einem Schwenkkörper 263 angebracht, in den ein Schwenkantrieb integriert ist. Mit diesem Schwenkkörper 263 kann der Werkzeuggreifer zwischen 0° und 360° um eine vertikale Achse C6 verschwenkt werden. Dadurch können die Positionen der Greiferbackenpaare 261, 262 und 261', 262' vertauscht werden.

Indem der Werkzeuggreifer 260 als Doppelgreifer ausgebildet ist, wird es möglich, ein abgenutztes Werkzeug 500' von der Werkzeugspindel 170 zu entfernen und durch ein frisch nachgeschärftes Werkzeug 500 zu ersetzen, ohne dass der Schwenkarm 250 mehrfach durch die Schottöffnung 320 hindurch bewegt werden muss. Das Greiferbackenpaar 261, 262 entnimmt dazu in der zuvor beschriebenen Weise das frisch nachgeschärfte Werkzeug 500 aus dem Werkzeugmagazin. Das Greiferbackenpaar 261', 262' bleibt dabei leer. Das Werkzeug 500 wird nun in der zuvor beschriebenen Weise mit dem Schwenkarm 250 durch die Schottöffnung 320 hindurch zur Werkzeugspindel 170 überführt. Nun nimmt das Greiferbackenpaar 261', 262' das abgenutzte Werkzeug 500' von der Werkzeugspindel 170 auf. Der Werkzeuggreifer 260 wird um 180° verschwenkt, und das Greiferbackenpaar 261, 262 übergibt das frisch nachgeschärfte Werkzeug 500 an die Werkzeugspindel 170. Der Schwenkarm 250 wird nun wieder zurück in den Innenraum des Werkzeugwechslers 200 geschwenkt.

Auf diese Weise können unproduktive Nebenzeiten beim Werkzeugwechsel verringert werden.

Die Greiferbackenpaare können auch anders als in der Fig. 16 angeordnet sein, und der Werkzeuggreifer kann anders als in der Fig. 16 mit dem Schwenkarm 250 verbunden sein. Beispielsweise können die Greiferbackenpaare nebeneinander auf derselben Seite des Werkzeuggreifers 260 angeordnet sein. Es können auch mehr als zwei Greiferbackenpaare vorgesehen sein.

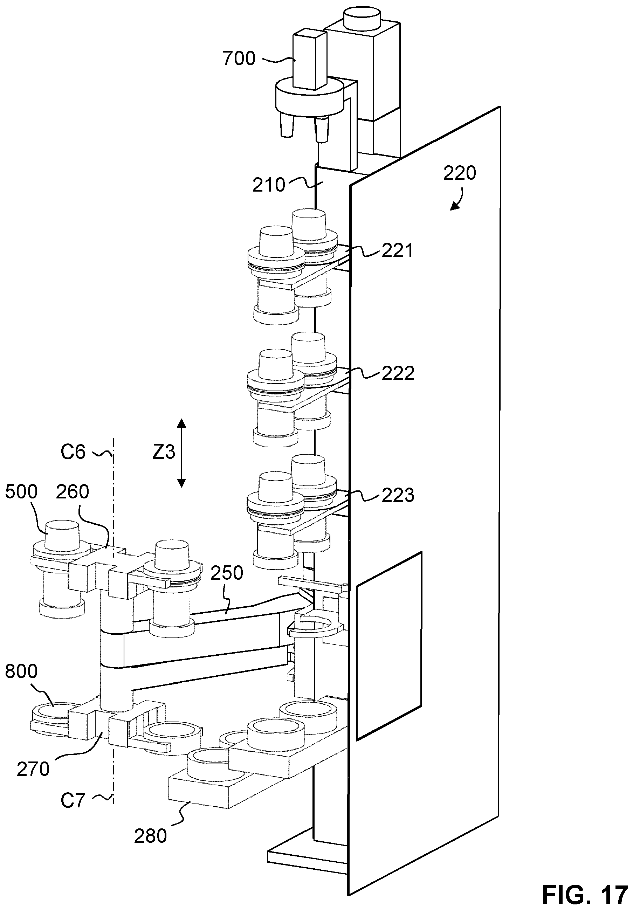

### Dritte Ausführungsform (Fig. 17)

Eine dritte Ausführungsform eines Werkzeugwechslers ist in der Fig. 17 illustriert. In der dritten Ausführungsform ist der Werkzeuggreifer 260 wie in der zweiten Ausführungsform als Doppelgreifer ausgebildet und um eine vertikale Schwenkachse C6 gegenüber dem Schwenkarm 250 verschwenkbar. Die unbeweglichen Werkzeugaufnahmen 221, 222, 223 sind nun als Doppelaufnahmen ausgebildet, d.h. sie können jeweils zwei Werkzeuge nebeneinander aufnehmen. Um ein Werkzeug in einer dieser Werkzeugaufnahmen abzulegen oder aus einer dieser Werkzeugaufnahmen aufzunehmen, lässt sich der Werkzeuggreifer 260 in entsprechende Schwenkstellungen bringen. Auf diese Weise lässt sich die Kapazität des Werkzeugmagazins 220 bei minimalem zusätzlichen Platzbedarf verdoppeln.

Zusätzlich weist der Werkzeugwechsler der dritten Ausführungsform optional auch noch einen Werkstückgreifer 270 auf, der dazu ausgebildet ist, Werkstücke 800 von einer Werkstückablage 280 aufzunehmen und in einer entsprechenden Stellung des Schwenkarms 250 an das Werkstückspannmittel 140 der Werkstückspindel 130 zu übergeben. Die Steuerung 180 kann dazu ein entsprechendes Steuerprogramm aufweisen.

Im vorliegenden Beispiel ist auch der Werkstückgreifer 270 als Doppelgreifer ausgebildet, um unproduktive Nebenzeiten beim Werkstückwechsel zu minimieren. Der Werkstückgreifer 270 kann selbstverständlich aber auch als Einfachgreifer ausgebildet sein. Er kann auch mit einem Einfachgreifer für die Werkzeuge kombiniert werden.

Am oberen Ende der Säule 201 ist ein optionaler Werkzeugreiniger 700 angebracht. Dieser dient dazu, den Kegel-Hohlschaft 511 des Werkzeughalters 510 eines Werkzeugs 500 (siehe Fig. 10) von Kühlschmiermittel und Spänen zu reinigen. Er wird daher auch als Konusreiniger bezeichnet. Der Werkzeugreiniger 700 ist so angeordnet, dass ein vom Greifer 260 gehaltenes Werkzeug 500 ohne Weiteres mit Hilfe des Z3-Schlittens 240 und des Schwenkarms 250 zum Werkzeugreiniger bewegt werden kann. Im vorliegenden Beispiel ist der Werkzeugreiniger 700 oberhalb der unbeweglichen Werkzeugaufnahmen 221, 222, 223 angeordnet, das ist aber nicht zwingend.

Selbstverständlich kann ein Werkzeugreiniger auch bei einer der anderen hier beschriebenen Ausführungsformen vorgesehen sein. Geeignete Werkzeugreiniger sind aus dem Stand der Technik bekannt und kommerziell erhältlich.

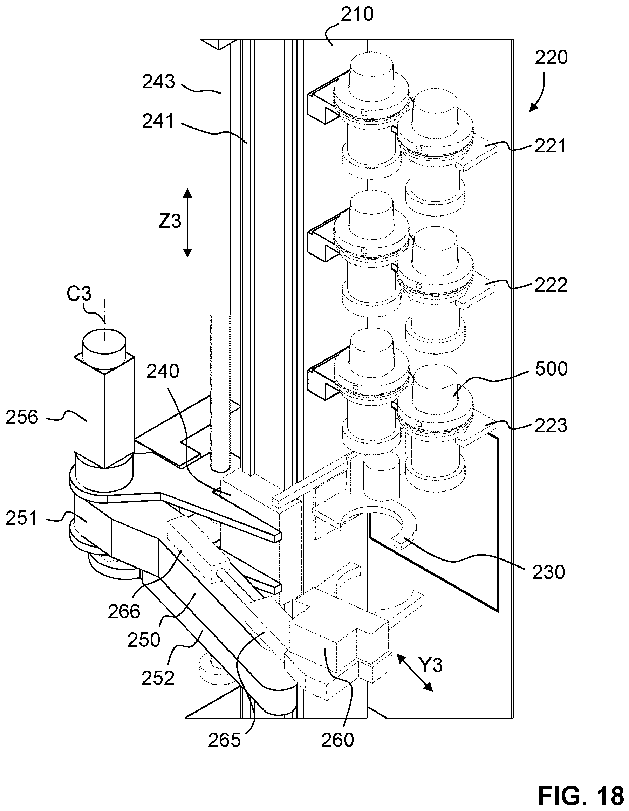

### Vierte Ausführungsform (Fig. 18)

Eine vierte Ausführungsform eines Werkzeugwechslers ist in der Fig. 18 illustriert. In dieser Ausführungsform ist der Werkzeuggreifer 260 gegenüber dem Schwenkarm 250 linear entlang einer Richtung Y3 verschiebbar. Dazu ist der Werkzeuggreifer 260 auf einem Greiferschlitten 265 angebracht, der mit einem Greiferschlittenantrieb 266 gesteuert entlang der Richtung Y3 gegenüber dem Schwenkarm 250 verschiebbar ist.

Die Richtung Y3 verläuft im vorliegenden Beispiel im Wesentlichen parallel zur Längsrichtung des Schwenkarms 250. Sie kann aber auch in einem beliebigen Winkel zu dieser Richtung verlaufen.

Der Werkzeuggreifer kann in dieser Ausführungsform auch als Doppelgreifer ausgebildet sein, wie das in Zusammenhang mit der zweiten und dritten Ausführungsform beschrieben wurde. Er kann dann auf dem Greiferschlitten 265 über einen Schwenkkörper angebracht sein. Ein Schwenkkörper kann aber auch entfallen, z.B. wenn die Greiferbackenpaare nebeneinander angeordnet sind.

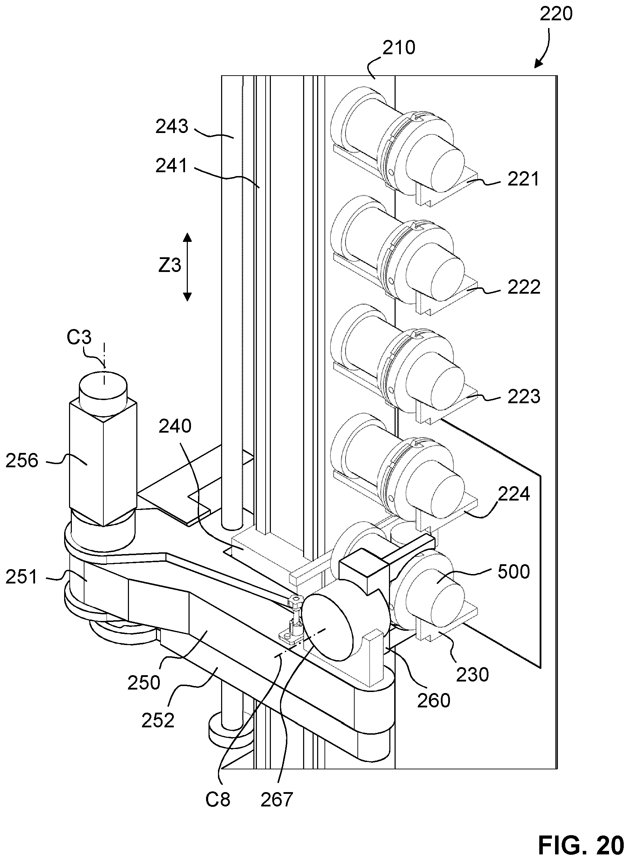

### Fünfte Ausführungsform (Figuren 19 und 20)

Eine fünfte Ausführungsform eines Werkzeugwechslers ist in den Figuren 19 und 20 illustriert. In dieser Ausführungsform ist der Werkzeuggreifer 260 an einem Schwenkkörper 267 mit integriertem Antrieb angebracht, der es ermöglicht, den Werkzeuggreifer 260 um eine horizontale Schwenkachse C8 gegenüber dem Schwenkarm 250 gesteuert um 90° zu verschwenken. Die Werkzeuge 500 können dadurch statt in einer vertikalen Orientierung in einer horizontalen Orientierung in Werkzeugaufnahmen 221, 222, 223, 224 und 230 abgelegt werden. Die Werkzeugaufnahmen sind dementsprechend zur Aufnahme von jeweils einem Werkzeug 500 in einer Orientierung, in der die Werkzeugachse horizontal verläuft, ausgebildet. Indem die Werkzeuge horizontal abgelegt werden, wird der Platzbedarf bei langen Werkzeugen markant verringert.

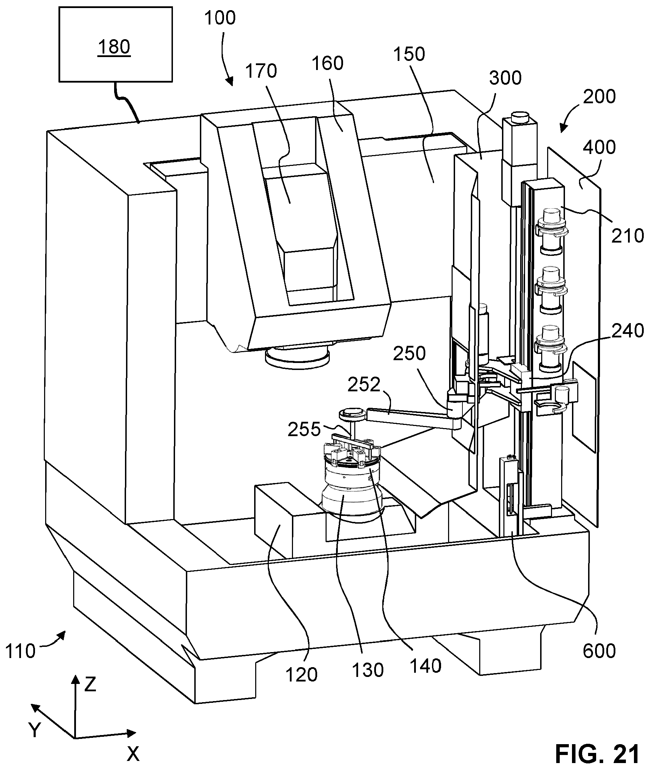

### Spannmittelwechsel (Figuren 21 bis 23)

Der Werkzeugwechsler 200 ermöglicht es nicht nur, automatisiert ein Werkzeug an der Werkzeugspindel 170 auszuwechseln, sondern er ermöglicht es auch, den Bediener beim Wechsel des Werkstückspannmittels 140 zu unterstützen. Dies ist in den Figuren 21 bis 23 anhand der ersten Ausführungsform illustriert.

Für den Spannmittelwechsel ist am freien Ende des Schwenkarms 250, unterhalb des Werkzeuggreifers 260, über ein Schwenklager 253 der schon erwähnte Zusatzarm 252 schwenkbar angebracht. Der Zusatzarm 252 ist im Normalbetrieb mit dem Schwenkarm 250 in einer Ruhestellung verriegelt. Dazu dient die vorstehend schon beschrieben Verriegelung 257. Die Ruhestellung wird mit einem nicht dargestellten Sensor überwacht, um im Normalbetrieb Schäden an der Maschine zu verhindern. Der Zusatzarm 252 lässt sich für den Spannmittelwechsel entriegeln, so dass er manuell gegenüber dem freien Ende des Schwenkarms 250 um eine vertikale Zusatzschwenkachse C5 in einer horizontalen Ebene verschwenkbar ist. Die Zusatzschwenkachse C5 ist von der Schwenkachse C3 des Schwenkarms 250 beabstandet. Am freien Ende des Zusatzarms 252 befindet sich eine bajonettartige Aufnahme 254 für einen Spannmittelhalter 255.

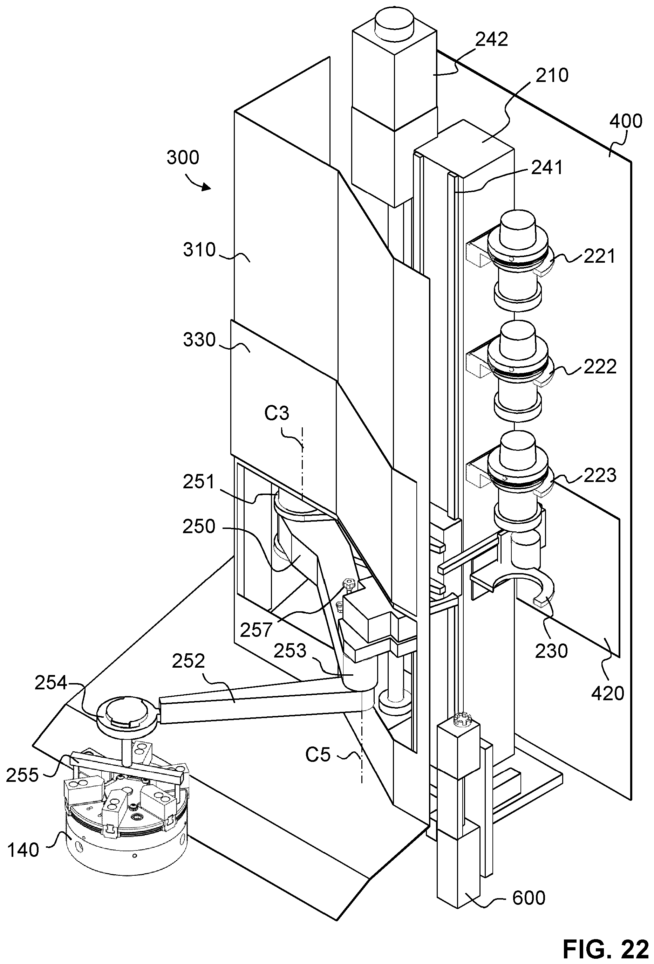

Um einen Spannmittelwechsel durchzuführen, wird zunächst der Z-Schlitten 150 entlang der positiven Z-Richtung ganz nach oben gefahren, und der X-Schlitten 160 wird entlang der negativen X-Richtung ganz nach links gefahren, d.h. weg vom Werkzeugwechsler 200, um Kollisionen mit dem Schwenkarm 250 und dem Zusatzarm 252 zu vermeiden. Der Y-Schlitten 120 wird entlang der negativen Y-Richtung ganz nach vorn gefahren, um ihn für den Bediener möglichst gut zugänglich zu machen. Anschliessend werden der Z3-Schlitten 240 und der Schwenkarm 250 in eine Stellung gebracht, die in den Figuren 21 und 22 illustriert ist. Der Bediener löst nun die Verriegelung des Zusatzarms 252 und schwenkt manuell den Zusatzarm 252 aus der Ruhestellung aus. Er bringt an der Aufnahme 254 den Spannmittelhalter 255 an und bringt den Zusatzarm 252 manuell in die Stellung der Figuren 21 und 22. Der Spannmittelhalter 255 befindet sich jetzt direkt über dem Spannmittel 140. Diese Stellung wird auch als Spannmittelwechselstellung bezeichnet.

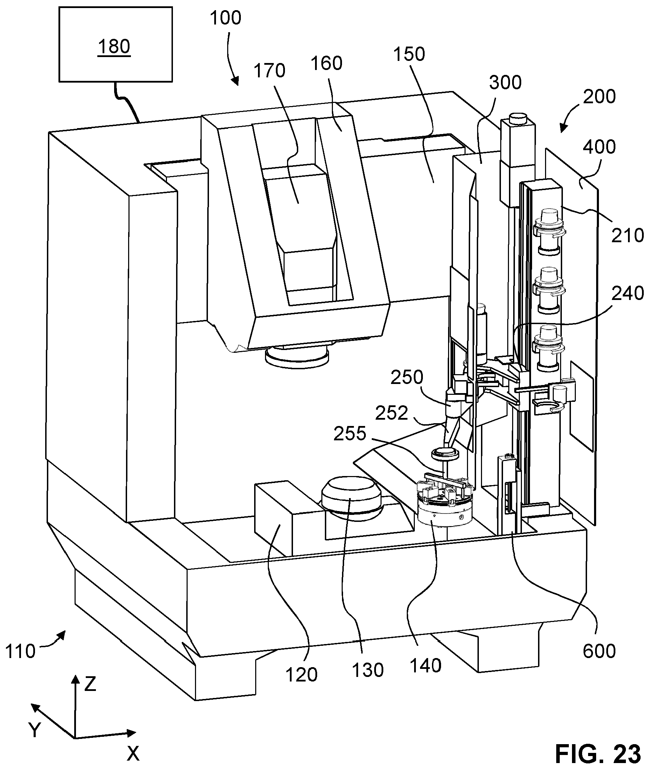

Durch eine Abwärtsbewegung des Z3-Schlittens wird nun der Spannmittelhalter 255 auf dem Spannmittel 140 aufgesetzt. Der Spannmittelhalter 255 wird anschliessend mit dem Spannmittel 140 verbunden, z.B. durch eine Schraubverbindung, und von der Werkstückspindel 130 gelöst. Durch eine Aufwärtsbewegung des Z3-Schlittens 240 wird das Spannmittel 140 von der Werkstückspindel 130 abgehoben und mit Hilfe des Zusatzarms 252 nach vorne hin aus dem Bearbeitungsraum der Werkzeugmaschine 100 hinausgeschwenkt. Die resultierende Entnahmestellung ist in der Fig. 23 illustriert. Das Spannmittel 140 kann nun durch eine Abwärtsbewegung des Z3-Schlittens 240 auf einer nicht zeichnerisch dargestellten Spannmittelablage, z.B. einem Wagen, abgelegt werden.

Um ungewollte Schwenkbewegungen des Zusatzarms 252 zu verhindern, kann am Schwenklager 253 eine Rasteinrichtung vorhanden sein, die den Zusatzarm 252 in einer oder mehreren ausgewählten Raststellungen rastend fixiert. Diese Rasteinrichtung kann derart ausgestaltet sein, dass sie ein Verschwenken des Zusatzarms 252 aus diesen Raststellungen heraus nur nach Überwindung eines bestimmten Lösedrehmoments um die Zusatzschwenkachse C5 ermöglicht. Dazu kann die Rasteinrichtung beispielsweise ein Federdruckstück aufweisen, das in den Raststellungen jeweils in eine Vertiefung in einer Steuerplatte des Schwenklagers eingreift. Alternativ kann auch eine manuell betätigbare Klemmvorrichtung vorhanden sein, um den Zusatzarm 252 in einer beliebigen Schwenkstellung fixieren zu können, oder das Schwenklager 253 kann so ausgebildet sein, dass es einer Schwenkbewegung eine gewisse Reibung entgegensetzt, um so ein unbeabsichtigtes Verschwenken des Zusatzarms 252 zu verhindern.

Um Beschädigungen des Spannmittels 140 beim Aufsetzen des Spannmittelhalters 255 auf das Spannmittel 140 zu vermeiden, kann der Spannmittelhalter 255 entlang der Z-Richtung auf Druck gefedert ausgebildet sein.

Während der Spannmittelwechsel anhand der ersten Ausführungsform erläutert wurde, kann ein Spannmittelwechsel auch bei allen anderen Ausführungsformen in sehr ähnlicher Weise durchgeführt werden.

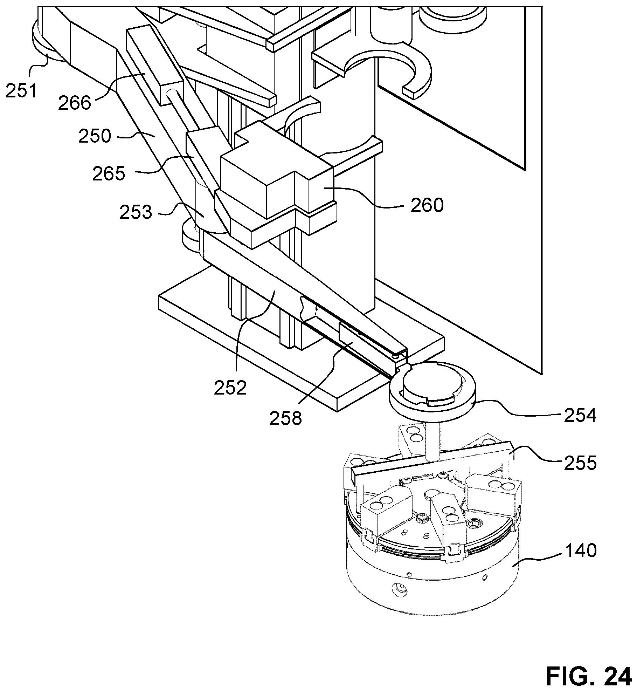

### Variante mit Kraftaufnehmer (Fig. 24)

Die Aufnahme 254 für den Spannmittelhalter 255 kann über einen Kraftaufnehmer 258 am Zusatzarm 252 angebracht sein. Dies ist in der Fig. 24 illustriert. Der Kraftaufnehmer 258 misst die Kraft, die durch die Gewichtskraft des an der Aufnahme 253 hängenden Spannmittels 140 erzeugt wird. Der Kraftaufnehmer 258 übermittelt Signale, die die ermittelte Kraft angeben, an die Steuerung 180. Die Steuerung 180 kann dadurch eine übermässige Belastung des Systems aus Schwenkarm 250 und Zusatzarm 252 erkennen, den Bediener entsprechend warnen und gegebenenfalls den weiteren Betrieb des Werkzeugwechslers stoppen. Eine Warnung kann auch für den Fall ausgegeben werden, dass z.B. die Verbindung zwischen Spannmittel 140 und Werkstückspindel 130 nicht korrekt gelöst wurde, so dass sich das Spannmittel 140 nicht abheben lässt.

Geeignete Kraftaufnehmer sind aus dem Stand der Technik bekannt und kommerziell erhältlich.

Während der Kraftaufnehmer in der Fig. 24 in Kombination mit der vierten Ausführungsform illustriert ist, kann ein Kraftaufnehmer auch bei jeder anderen Ausführungsform zum Einsatz kommen.

### Weitere Abwandlungen

Selbstverständlich sind verschiedene weitere Abwandlungen des vorstehend beschriebenen Werkzeugwechslers möglich, ohne den Bereich der Erfindung, wie sie in den Ansprüchen definiert ist, zu verlassen.

### BEZUGSZEICHENLISTE

- 100: Werkzeugmaschine
- 110: Maschinenbett
- 111: horizontaler Abschnitt
- 112: vertikaler Abschnitt
- 120: Y-Schlitten
- 130: Werkstückspindel
- 140: Werkstückspannmittel
- 150: Z-Schlitten
- 160: X-Schlitten
- 170: Werkzeugspindel
- 171: Konusaufnahme
- 180: Steuereinrichtung
- 200: Werkzeugwechsler
- 210: Säule
- 220: Werkzeugmagazin
- 221-224: unbewegliche Werkzeugaufnahme (Werkzeugspeicherplatz)
- 230: bewegliche Werkzeugaufnahme (Werkzeugbestückungsplatz)
- 231: X4-Führung
- 232: X4-Laufschiene
- 233: Platte
- 234: Schwenklager
- 235: Halteelement
- 240: Hubschlitten (Z3-Schlitten)
- 241: Führungsschiene
- 242: Hubschlittenantrieb
- 243: Kugelgewindetrieb
- 250: Schwenkarm
- 251: Schwenklager
- 252: Zusatzarm
- 253: Schwenklager
- 254: Aufnahme
- 255: Spannmittelhalter
- 256: Schwenkantrieb
- 257: Verriegelung des Zusatzarms
- 258: Kraftaufnehmer
- 260: Werkzeuggreifer
- 261, 262: Greiferbacken
- 261', 262': Greiferbacken
- 263: Schwenklager mit Antrieb
- 265: Greiferschlitten
- 266: Greiferschlittenantrieb
- 267: Schwenkkörper mit Antrieb
- 270: Werkstückgreifer
- 280: Werkstückablage
- 300: Schott
- 310: Schottwand
- 320: Schottöffnung
- 330: Schotttür
- 340: Schürze
- 400: Aussenwand
- 410: Werkzeugbestückungsöffnung
- 420: Werkzeugbestückungstür
- 500, 500': Werkzeug
- 510: Werkzeughalter
- 511: Kegel-Hohlschaft
- 512: RFID-Transponder
- 513: Orientierungskerbe ("Deutsches Eck")
- 520: Wälzschälrad
- 521: Schneide
- 522: RFID-Transponder
- 530: Kegelreiniger
- 540: Messtaster
- 600: RFID-Station
- 610: Basis
- 611: Führungsschiene
- 620: Vertikalwagen
- 630: RFID-Transceiver
- 640: Federelement
- 700: Werkzeugreiniger
- 800: Werkstück
- X, Y, Z: Linearachsen der Werkzeugmaschine
- A: Schwenkachse der Werkzeugspindel
- B: Werkzeugachse
- C: Werkstückachse
- Z3: Linearachse des Z3-Schlittens
- Y3: Linearachse des Greiferschlittens
- C3: Schwenkachse des Schwenkarms
- X4: Verschiebungsrichtung der beweglichen Werkzeugaufnahme
- C4: Schwenkachse der beweglichen Werkzeugaufnahme
- C5: Zusatzschwenkachse des Zusatzarms
- C6: vertikale Schwenkachse des Werkzeuggreifers
- C7: vertikale Schwenkachse des Werkstückgreifers
- C8: horizontale Schwenkachse des Werkzeuggreifers

## Patentansprüche

1. Werkzeugwechsler (200) zum Auswechseln von Werkzeugen (500) in einer Werkzeugmaschine (100), insbesondere einer Verzahnmaschine, aufweisend:
eine Tragstruktur (210);
einen Hubschlitten (240), der an der Tragstruktur (210) entlang einer vertikal im Raum verlaufenden Hubrichtung (Z3) geführt ist;
einen Schwenkarm (250), der um eine vertikal im Raum verlaufende Schwenkachse (C3) schwenkbar an dem Hubschlitten (240) angebracht ist;
einen Werkzeuggreifer (260), der an dem Schwenkarm (250) angebracht ist und der dazu ausgebildet ist, ein Werkzeug (500) zu ergreifen; und
ein Werkzeugmagazin (220) mit einer Mehrzahl von vertikal übereinander angeordneten Werkzeugaufnahmen (221, 222, 223, 230),
wobei der Werkzeugwechsler (200) dazu ausgebildet ist, ein vom Werkzeuggreifer (260) ergriffenes Werkzeug (500) durch eine kombinierte Hub- und Schwenkbewegung des Schwenkarms (250) wahlweise zwischen einer der Werkzeugaufnahmen (221, 222, 223, 230) und einer Werkzeugspindel (170) der Werkzeugmaschine (100) oder zwischen zwei unterschiedlichen Werkzeugaufnahmen (221, 222, 223, 230) des Werkzeugmagazins (200) zu bewegen,
wobei die Tragstruktur (210) eine vertikale Säule umfasst, die dazu ausgebildet ist, mit einem unteren Ende an einem Maschinenbett (110) der Werkzeugmaschine (100) angebracht zu werden, und
wobei der Hubschlitten (240) entlang der Hubrichtung (Z3) an der Säule geführt ist, **dadurch gekennzeichnet, dass**
die Werkzeugaufnahmen (221, 222, 223, 230) an der Säule angebracht sind.

2. Werkzeugwechsler (200) nach Anspruch 1, wobei eine der Werkzeugaufnahmen (230) beweglich, insbesondere entlang einer horizontalen Bestückungsrichtung (X4) verschiebbar und/oder um eine vertikale Bestückungsschwenkachse (C4) schwenkbar, an der Tragstruktur (210) angebracht ist, um eine Bestückung des Werkzeugmagazins (220) zu erleichtern.

3. Werkzeugwechsler (200) nach Anspruch 2, aufweisend eine Aussenwand (400), die einen Innenraum des Werkzeugwechslers (200) von einem Aussenraum trennt,
wobei die Aussenwand eine Werkzeugbestückungsöffnung (410) zum Austausch von Werkzeugen (500) zwischen dem Innenraum und dem Aussenraum aufweist,
wobei die bewegliche Werkzeugaufnahme (230) durch die Werkzeugbestückungsöffnung (410) hindurch bewegbar ist, und
wobei der Werkzeugwechsler (200) vorzugsweise eine Werkzeugbestückungstür (420) aufweist, die dazu ausgebildet ist, die Werkzeugbestückungsöffnung (410) wahlweise zu verschliessen oder freizugeben.

4. Werkzeugwechsler (200) nach Anspruch 2 oder 3, aufweisend:
eine Bestückungslinearführung (231); und
einen an der Bestückungslinearführung (231) entlang der horizontalen Bestückungsrichtung (X4) verschiebbar geführten Bestückungswagen (232, 233),
wobei die bewegliche Werkzeugaufnahme (230) um die vertikale Bestückungsschwenkachse (C4) schwenkbar am Bestückungswagen (232, 233) angebracht ist.

5. Werkzeugwechsler (200) nach einem der vorhergehenden Ansprüche, ausserdem aufweisend ein Schott (300), das dazu ausgebildet ist, einen Innenraum des Werkzeugwechslers (200) von einem Bearbeitungsraum der Werkzeugmaschine (100) zu trennen,
wobei das Schott (300) eine Schottöffnung (320) aufweist,
wobei der Werkzeugwechsler (200) eine Schotttür (330) aufweist, die dazu ausgebildet ist, die Schottöffnung (320) wahlweise zu verschliessen oder freizugeben, und
wobei der Schwenkarm (250) mit dem daran angebrachten Werkzeuggreifer (260) in mindestens einer Stellung des Hubschlittens (240) durch die Schottöffnung (320) hindurch bewegbar ist.

6. Werkzeugwechsler (200) nach einem der vorhergehenden Ansprüche, ausserdem aufweisend eine Lesestation (600), um einen maschinenlesbaren Datenträger (521) am Werkzeug (500) auszulesen,
wobei die Lesestation (600) derart angeordnet ist, dass ein vom Werkzeuggreifer (260) gehaltenes Werkzeug (500) durch eine kombinierte Hub- und Schwenkbewegung des Schwenkarms (250) zur Lesestation (600) bewegbar ist, um den Datenträger (521) am Werkzeug (500) auszulesen,
wobei die Lesestation (600) optional eine Basis (610), eine Lesevorrichtung (630) zum Auslesen des Datenträgers (521) und ein dazwischen angeordnetes Federelement (640) aufweist, derart, dass die Lesevorrichtung (630) gegenüber der Basis (610) entgegen einer vom Federelement (640) erzeugten Rückstellkraft vertikal nach unten bewegbar ist.

7. Werkzeugwechsler (200) nach einem der vorhergehenden Ansprüche, ausserdem aufweisend einen Werkzeugreiniger (700),
wobei der Werkzeugreiniger (700) derart angeordnet ist, dass ein vom Werkzeuggreifer (260) gehaltenes Werkzeug (500) durch eine kombinierte Hub- und Schwenkbewegung des Schwenkarms (250) zum Werkzeugreiniger (700) bewegbar ist, um einen Werkzeughalter (510) des Werkzeugs (500) zu reinigen.

8. Werkzeugwechsler (200) nach einem der vorhergehenden Ansprüche, wobei der Werkzeuggreifer (260) als Mehrfachgreifer mit mindestens zwei Greiferbackenpaaren (261, 262; 261', 262') ausgebildet ist, um zwei oder mehr Werkzeuge (500, 500') zu ergreifen.

9. Werkzeugwechsler (200) nach einem der vorhergehenden Ansprüche, wobei der Werkzeuggreifer (260) bewegbar an dem Schwenkarm (250) angebracht ist, insbesondere schwenkbar, beispielsweise um eine vertikale Greiferschwenkachse (C6) oder um eine horizontale Greiferschwenkachse (C8) schwenkbar, und/oder verschiebbar, insbesondere entlang einer horizontalen Greiferverschieberichtung (Y3) linear verschiebbar.

10. Werkzeugwechsler (200) nach einem der vorhergehenden Ansprüche, ausserdem aufweisend:
einen Kegelreiniger (530) zum Reinigen einer Konusaufnahme (171) der Werkzeugspindel (170), wobei der Kegelreiniger (530) vom Werkzeuggreifer (260) ergreifbar ist, so dass er durch eine kombinierte Hub- und Schwenkbewegung des Schwenkarms (250) zur Werkzeugspindel (170) bewegbar ist; und/oder
einen Messtaster (540), insbesondere für eine Rund- und Planlaufmessung eines Werkstückspannmittels (140) der Werkzeugmaschine (100), wobei der Messtaster (540) vom Werkzeuggreifer (260) ergreifbar ist, so dass er durch eine kombinierte Hub- und Schwenkbewegung des Schwenkarms (250) in eine Messposition bewegbar ist.

11. Werkzeugwechsler (200) nach einem der vorhergehenden Ansprüche, ausserdem aufweisend einen Werkstückgreifer (270), der am Schwenkarm (250) angebracht ist und der dazu ausgebildet ist, Werkstücke (800) von einer Werkstückablage (280) aufzunehmen und an eine Werkstückspindel (130) der Werkzeugmaschine (100) zu übergeben.

12. Werkzeugwechsler (200) nach einem der vorhergehenden Ansprüche, ausserdem aufweisend:
einen Hubschlittenantrieb (242), um den Hubschlitten (240) zu einer Hubbewegung entlang der Hubrichtung (Z3) anzutreiben;
einen Schwenkantrieb (256), um den Schwenkarm (250) zu einer Schwenkbewegung gegenüber dem Hubschlitten (240) um die Schwenkachse (C3) anzutreiben; und
eine Steuereinrichtung (180), die dazu ausgebildet ist, den Hubschlittenantrieb (242), den Schwenkantrieb (256) und den Werkzeuggreifer (260) anzusteuern,
wobei die Steuereinrichtung (180) optional weiter dazu ausgebildet ist, mindestens einen der folgenden Vorgänge zu bewirken:
a) Ergreifen eines Werkzeugs (500) mit dem Werkzeuggreifer (260);
b) Bewegen eines vom Werkzeuggreifer (260) ergriffenen Werkzeugs (500) zwischen einer der Werkzeugaufnahmen (221, 222, 223, 230) und einer Werkzeugspindel (170) der Werkzeugmaschine (100) durch eine kombinierte Hub- und Schwenkbewegung des Schwenkarms (250);
c) Bewegen eines vom Werkzeuggreifer (260) ergriffenen Werkzeugs (500) zwischen zwei unterschiedlichen Werkzeugaufnahmen (221, 222, 223, 230) des Werkzeugmagazins (220) durch eine kombinierte Hub- und Schwenkbewegung des Schwenkarms (250);
d) Öffnen und Schliessen der Schotttür (330), sofern der Werkzeugwechsler nach Anspruch 5 ausgebildet ist;
e) Bewegen eines vom Werkzeuggreifer (260) ergriffenen Werkzeugs (500) zur Lesestation (600) durch eine kombinierte Hub- und Schwenkbewegung des Schwenkarms (250) und Auslesen eines Datenträgers (521) an dem ergriffenen Werkzeug (500), sofern der Werkzeugwechsler nach Anspruch 6 ausgebildet ist;
f) Bewegen eines vom Werkzeuggreifer (260) ergriffenen Werkzeugs (500) zum Werkzeugreiniger (700) durch eine kombinierte Hub- und Schwenkbewegung des Schwenkarms (250) und Reinigen eines Werkzeughalters (510) des ergriffenen Werkzeugs (500) mit dem Werkzeugreiniger (700), sofern der Werkzeugwechsler nach Anspruch 7 ausgebildet ist;
g) Bewegen des Werkzeuggreifers (260) relativ zum Schwenkarm (250), sofern der Werkzeugwechsler nach Anspruch 9 ausgebildet ist;
h) Bewegen des vom Werkzeuggreifer (260) ergriffenen Kegelreinigers (530) zur Werkzeugspindel (170) durch eine kombinierte Hub- und Schwenkbewegung des Schwenkarms (250), sofern der Werkzeugwechsler nach Anspruch 10 ausgebildet ist;
j) Bewegen des vom Werkzeuggreifer (260) ergriffenen Messtasters (540) in eine Messposition durch eine kombinierte Hub- und Schwenkbewegung des Schwenkarms (250), sofern der Werkzeugwechsler nach Anspruch 10 ausgebildet ist; und
k) Ergreifen eines Werkstücks (800) mit dem Werkstückgreifer (270) und Bewegen eines vom Werkstückgreifer (270) ergriffenen Werkstücks (800) zwischen einer Werkstückablage (280) und einer Werkstückspindel (130) der Werkzeugmaschine (100) durch eine kombinierte Hub- und Schwenkbewegung des Schwenkarms (250), sofern der Werkzeugwechsler nach Anspruch 11 ausgebildet ist.

13. Werkzeugwechsler (200) nach einem der vorhergehenden Ansprüche, ausserdem aufweisend:
einen Zusatzarm (252), der um eine vertikal verlaufende Zusatzschwenkachse (C5) schwenkbar an dem Schwenkarm (250) angebracht ist, derart, dass die Zusatzschwenkachse (C5) des Zusatzarms (252) und die Schwenkachse (C3) des Schwenkarms (250) parallel und beabstandet zueinander verlaufen,
wobei der Zusatzarm (252) vorzugsweise in einer Ruhestellung mit dem Schwenkarm (250) verriegelbar ist, um eine Schwenkbewegung des Zusatzarms (252) um die Zusatzschwenkachse (C5) zu verhindern, und
wobei der Zusatzarm (252) dazu ausgebildet ist, an ihm ein Werkstückspannmittel (140) der Werkzeugmaschine (100) zu befestigen, und
wobei der Werkzeugwechsler zudem optional aufweist:
einen Spannmittelhalter (255), der dazu ausgebildet ist, derart lösbar mit dem Zusatzarm (252) und dem Werkstückspannmittel (140) verbunden zu werden, dass das Werkstückspannmittel (140) über den Spannmittelhalter (255) am Zusatzarm (252) befestigt, insbesondere hängend befestigt, ist,
wobei optional am Zusatzarm (252) ein Kraftaufnehmer (258) angeordnet ist, um eine Belastung des Zusatzarms (252) in vertikaler Richtung zu erfassen.

14. Werkzeugmaschine (100), aufweisend:
ein Maschinenbett (110);
eine Werkzeugspindel (170), um ein Werkzeug (500) zu einer Rotation um eine Werkzeugachse (B) anzutreiben, wobei die Werkzeugspindel (170) vorzugsweise derart schwenkbar in der Werkzeugmaschine (100) angeordnet ist, dass sie in eine Stellung gebracht werden kann, in der die Werkzeugachse (B) vertikal im Raum verläuft; und
einen Werkzeugwechsler (200) nach einem der vorhergehenden Ansprüche,
wobei der Werkzeugwechsler (200) derart am Maschinenbett (110) angeordnet ist, dass ein vom Werkzeuggreifer (260) ergriffenes Werkzeug (500) durch eine kombinierte Hub- und Schwenkbewegung des Schwenkarms (250) von einer der Werkzeugaufnahmen (221, 222, 223, 230) zur Werkzeugspindel (170) bewegbar ist, und
optional, eine Werkstückspindel (130) mit einem Werkstückspannmittel (140),
wobei, falls der Werkzeugwechsler (200) nach Anspruch 13 ausgebildet ist, die Werkstückspindel (130) derart am Maschinenbett (110) angeordnet ist, dass das Werkstückspannmittel (140) am Zusatzarm (252) befestigt werden kann, wenn dieser gegenüber dem Schwenkarm (250) aus der Ruhestellung heraus verschwenkt ist.

15. Verwendung eines Werkzeugwechslers (200) nach Anspruch 13 zum Wechseln eines Werkstückspannmittels (140) an einer Werkzeugmaschine (100).

## Claims

1. A tool changer (200) for changing tools (500) in a machine tool (100), in particular, in a gear cutting machine, comprising:
a support structure (210);
a lifting carriage (240) which is guided on the support structure (210) along a lifting direction (Z3) extending vertically in space;
a pivot arm (250) which is pivotably mounted to the lifting carriage (240) so that it is pivotable about a pivot axis (C3) extending vertically in space;
a tool gripper (260) mounted on the pivot arm (250) and configured to grip a tool (500);
and
a tool magazine (220) with a plurality of tool holders (221, 222, 223, 230) arranged vertically one above the other,
wherein the tool changer (200) is configured to move a tool (500) gripped by the tool gripper (260) by a combined lifting and pivoting movement of the pivot arm (250) selectively between one of the tool holders (221, 222, 223, 230) and a tool spindle (170) of the machine tool (100) or between two different tool holders (221, 222, 223, 230) of the tool magazine (200),
wherein the support structure (210) comprises a vertical column configured to be mounted at a lower end on a machine bed (110) of the machine tool (100), and
wherein the lifting carriage (240) is guided along the lifting direction (Z3) on the column,
**characterised in that** the tool holders (221, 222, 223, 230) are mounted to the column.

2. The tool changer (200) of claim 1, wherein one of the tool holders (230) is mounted movably, in particular displaceably along a horizontal loading direction (X4) and/or pivotably about a vertical loading pivot axis (C4), to the support structure (210) to facilitate loading of the tool magazine (220).

3. The tool changer (200) of claim 2, comprising an outer wall (400) separating an interior space of the tool changer (200) from an exterior space,
wherein the outer wall has a tool loading opening (410) for exchanging tools (500) between the interior space and the exterior space,
wherein the movable tool holder (230) is movable through the tool loading opening (410), and
wherein the tool changer (200) preferably comprises a tool loading door (420) configured to selectively close or open the tool loading opening (410).

4. The tool changer (200) of claim 2 or 3, comprising:
a loading linear guide (231); and
a loading carriage (232, 233) displaceably guided along the horizontal loading direction (X4) on the loading linear guide (231),
wherein the movable tool holder (230) is mounted on the loading carriage (232, 233) so as to be pivotable about the vertical loading pivot axis (C4).

5. The tool changer (200) of any one of the preceding claims, further comprising a bulkhead (300) configured to separate an interior space of the tool changer (200) from a machining space of the machine tool (100),
wherein the bulkhead (300) comprises a bulkhead opening (320),
wherein the tool changer (200) comprises a bulkhead door (330) configured to selectively close or open the bulkhead opening (320), and
wherein the pivot arm (250) with the tool gripper (260) mounted thereto is movable through the bulkhead opening (320) in at least one position of the lifting carriage (240).

6. The tool changer (200) of any one of the preceding claims, further comprising a reading station (600) for reading a machine readable data carrier (521) on the tool (500),
wherein the reading station (600) is arranged such that a tool (500) held by the tool gripper (260) is movable to the reading station (600) by a combined lifting and pivoting movement of the pivot arm (250) in order to read the data carrier (521) on the tool (500),
wherein the reading station (600) optionally comprises a base (610), a reading device (630) for reading the data carrier (521) and a spring element (640) arranged therebetween, in such a way that the reading device (630) is movable vertically downwards relative to the base (610) against a restoring force generated by the spring element (640).

7. The tool changer (200) of any one of the preceding claims, further comprising a tool cleaner (700),
wherein the tool cleaner (700) is arranged such that a tool (500) held by the tool gripper (260) is movable towards the tool cleaner (700) by a combined lifting and pivoting movement of the pivot arm (250) to clean a tool support (510) of the tool (500).

8. The tool changer (200) of any one of the preceding claims, wherein the tool gripper (260) is configured as a multiple gripper having at least two pairs of gripper jaws (261, 262; 261', 262') for gripping two or more tools (500, 500').

9. The tool changer (200) of any one of the preceding claims, wherein the tool gripper (260) is movably attached to the pivot arm (250), in particular pivotably, for example pivotable about a vertical gripper pivot axis (C6) or about a horizontal gripper pivot axis (C8), and/or displaceable, in particular linearly displaceable along a horizontal gripper displacement direction (Y3).

10. The tool changer (200) of any one of the preceding claims, further comprising:
a taper cleaner (530) for cleaning a taper receptacle (171) of the tool spindle (170), the taper cleaner (530) being grippable by the tool gripper (260) so as to be movable towards the tool spindle (170) by a combined lifting and pivoting movement of the pivot arm (250); and/or
a measuring probe (540), in particular for a radial and axial runout measurement of a workpiece clamping means (140) of the machine tool (100), wherein the measuring probe (540) is grippable by the tool gripper (260) so that it can be moved into a measuring position by a combined lifting and pivoting movement of the pivot arm (250).

11. The tool changer (200) of any one of the preceding claims, further comprising a workpiece gripper (270) which is mounted on the pivot arm (250) and which is configured to pick up workpieces (800) from a workpiece rest (280) and to transfer them to a workpiece spindle (130) of the machine tool (100).

12. The tool changer (200) of any one of the preceding claims, further comprising:
a lifting carriage drive (242) for driving the lifting carriage (240) to perform a lifting movement along the lifting direction (Z3);
a pivot drive (256) for driving the pivot arm (250) to perform a pivoting movement relative to the lifting carriage (240) about the pivot axis (C3); and
a control device (180) configured to control the lifting carriage drive (242), the pivot drive (256) and the tool gripper (260),
wherein optionally the control device (180) is configured to effect at least one of the following operations:
a) gripping a tool (500) with the tool gripper (260);
b) moving a tool (500) gripped by the tool gripper (260) between one of the tool holders (221, 222, 223, 230) and a tool spindle (170) of the machine tool (100) by a combined lifting and pivoting movement of the pivot arm (250);
c) moving a tool (500) gripped by the tool gripper (260) between two different tool holders (221, 222, 223, 230) of the tool magazine (220) by a combined lifting and pivoting movement of the pivot arm (250);
d) opening and closing the bulkhead door (330), provided that the tool changer is configured according to claim 5;
e) moving a tool (500) gripped by the tool gripper (260) to the reading station (600) by a combined lifting and pivoting movement of the pivot arm (250) and reading a data carrier (521) on the gripped tool (500), provided that the tool changer is configured according to claim 6;
f) moving a tool (500) gripped by the tool gripper (260) to the tool cleaner (700) by a combined lifting and pivoting motion of the pivot arm (250) and cleaning a tool support (510) of the gripped tool (500) with the tool cleaner (700), provided that the tool changer is configured according to claim 7;
g) moving the tool gripper (260) relative to the pivot arm (250), if the tool changer is configured according to claim 9;
h) moving the taper cleaner (530) gripped by the tool gripper (260) to the tool spindle (170) by a combined lifting and pivoting motion of the pivot arm (250), provided that the tool changer is configured according to claim 10;
j) moving the measuring probe (540) gripped by the tool gripper (260) to a measuring position by a combined lifting and pivoting movement of the pivot arm (250), provided that the tool changer is configured according to claim 10; and
k) gripping a workpiece (800) with the workpiece gripper (270) and moving a workpiece (800) gripped by the workpiece gripper (270) between a workpiece rest (280) and a workpiece spindle (130) of the machine tool (100) by a combined lifting and pivoting movement of the pivot arm (250), provided that the tool changer is configured according to claim 11.

13. The tool changer (200) of any one of the preceding claims, further comprising:
an auxiliary arm (252) pivotably mounted to the pivot arm (250) about a vertically extending auxiliary pivot axis (C5) such that the auxiliary pivot axis (C5) of the auxiliary arm (252) and the pivot axis (C3) of the pivot arm (250) are parallel and spaced apart from one another,
wherein the auxiliary arm (252) is preferably lockable to the pivot arm (250) in a rest position to prevent a pivoting movement of the auxiliary arm (252) about the auxiliary pivot axis (C5), and
wherein the auxiliary arm (252) is configured to have a workpiece clamping means (140) of the machine tool (100) attached thereto, and
wherein optionally the tool changer further comprises:
a clamping means holder (255) which is configured to be detachably connected to the auxiliary arm (252) and the workpiece clamping means (140) in such a way that the workpiece clamping means (140) is attached, in particular suspended, to the auxiliary arm (252) via the clamping means holder (255),
wherein optionally a force transducer (258) is arranged on the auxiliary arm (252) to detect a load on the auxiliary arm (252) in the vertical direction.

14. A machine tool (100), comprising:
a machine bed (110);
a tool spindle (170) for driving a tool (500) to rotate about a tool axis (B), the tool spindle (170) preferably being pivotably arranged in the machine tool (100) such that it can be brought into a position in which the tool axis (B) extends vertically in space; and
a tool changer (200) according to any one of the preceding claims, wherein the tool changer (200) is arranged on the machine bed (110) in such a way that a tool (500) gripped by the tool gripper (260) is movable from one of the tool holders (221, 222, 223, 230) to the tool spindle (170) by a combined lifting and pivoting movement of the pivot arm (250), and
optionally, a workpiece spindle (130) having a workpiece clamping means (140),
wherein, if the tool changer (200) is formed according to claim 13, the workpiece spindle (130) is arranged on the machine bed (110) in such a way that the workpiece clamping means (140) can be attached to the auxiliary arm (252) when the latter is pivoted out of the rest position relative to the pivot arm (250).

15. Use of the tool changer (200) of claim 13 for changing a workpiece clamping means (140) on a machine tool (100).

## Revendications

1. Un changeur d'outils (200) pour changer des outils (500) dans une machine-outil (100), notamment une machine à tailler les engrenages, comprenant :
une structure de support (210) ;
un chariot de levage (240), guidé sur la structure de support (210) le long d'une course verticale (Z3) s'étendant dans l'espace ;
un bras pivotant (250), monté de manière pivotante sur le chariot de levage (240) autour d'un axe de pivotement (C3) s'étendant verticalement dans l'espace ;
un préhenseur d'outils (260), monté sur le bras pivotant (250) et conçu pour saisir un outil (500) ; et
un magasin d'outils (220) avec une pluralité de porte-outils disposés verticalement les uns au-dessus des autres (221, 222, 223, 230),
dans lequel le changeur d'outils (200) est configuré pour déplacer un outil (500) saisi par le préhenseur d'outils (260) au moyen d'un mouvement combiné de levage et de pivotement du bras pivotant (250) soit entre l'un des porte-outils (221, 222, 223, 230) et une broche porte-outil (170) de la machine-outil (100), soit entre deux porte-outils différents (221, 222, 223, 230) du magasin d'outils (200),
dans lequel la structure de support (210) comprend une colonne verticale, conçue pour être fixée à une extrémité inférieure à un banc de machine (110) de la machine-outil (100), et
dans lequel le chariot de levage (240) est guidé le long de la direction de levage (Z3) sur la colonne, et
dans lequel les porte-outils (221, 222, 223, 230) sont fixés à la colonne.

2. Le changeur d'outils (200) selon la revendication 1, dans lequel l'un des porte-outils (230) est mobile, notamment déplaçable le long d'une direction de chargement horizontale (X4) et/ou pivotant autour d'un axe de pivot de chargement vertical (C4), fixé à la structure de support (210) pour faciliter le chargement du magasin d'outils (220).

3. Le changeur d'outils (200) selon la revendication 2, comprenant une paroi extérieure (400) qui sépare l'intérieur du changeur d'outils (200) d'un espace extérieur,
la paroi extérieure comportant une ouverture de chargement d'outils (410) pour l'échange d'outils (500) entre l'intérieur et l'extérieur,
le porte-outil mobile (230) étant mobile à travers l'ouverture de chargement d'outils (410), et le changeur d'outils (200) comportant de préférence une porte de chargement d'outils (420) configurée pour fermer ou libérer sélectivement l'ouverture de chargement d'outils (410).

4. Le changeur d'outils (200) selon la revendication 2 ou 3, comprenant :
un guide linéaire de placement (231) ; et
un chariot de placement (232, 233) guidé de manière coulissante sur le guide linéaire de placement (231) le long de la direction horizontale de placement (X4),
dans lequel le porte-outil mobile (230) est monté de manière pivotante sur le chariot de placement (232, 233) autour de l'axe de pivot de placement vertical (C4).

5. Le changeur d'outils (200) selon l'une des revendications précédentes, comprenant en outre une cloison (300) configurée pour séparer l'intérieur du changeur d'outils (200) d'une zone d'usinage de la machine-outil (100),
la cloison (300) comportant une ouverture de cloison (320),
le changeur d'outils (200) comportant une porte de cloison (330) configurée pour fermer ou libérer sélectivement l'ouverture de cloison (320), et
le bras pivotant (250), avec le préhenseur d'outils (260) y fixé, pouvant se déplacer à travers l'ouverture de cloison (320) dans au moins une position du chariot de levage (240).

6. Le changeur d'outils (200) selon l'une des revendications précédentes, comprenant en outre une station de lecture (600), pour lire un support de données lisible par machine (521) sur l'outil (500),
dans laquelle la station de lecture (600) est agencée de telle sorte qu'un outil (500) tenu par le préhenseur d'outils (260) puisse être déplacé vers la station de lecture (600) par un mouvement combiné de levage et de pivotement du bras pivotant (250) afin de lire le support de données (521) sur l'outil (500), dans lequel la station de lecture (600) comporte éventuellement une base (610), un dispositif de lecture (630) pour lire le support de données (521) et un élément de ressort (640) disposé entre eux, de sorte que le dispositif de lecture (630) soit mobile verticalement vers le bas par rapport à la base (610) en contre d'une force de rappel générée par l'élément de ressort (640).

7. Le changeur d'outils (200) selon l'une des revendications précédentes, comprenant en outre un nettoyeur d'outils (700),
dans lequel le nettoyeur d'outils (700) est agencé de telle sorte qu'un outil (500) tenu par le préhenseur d'outils (260) puisse être déplacé vers le nettoyeur d'outils (700) par un mouvement combiné de levage et de pivotement du bras pivotant (250), afin de nettoyer un porte-outil (510) de l'outil (500).

8. Le changeur d'outils (200) selon l'une des revendications précédentes, dans lequel le préhenseur d'outils (260) est conçu comme un préhenseur multiple avec au moins deux paires de mâchoires de préhension (261, 262 ; 261', 262') pour saisir deux outils ou plus (500, 500').

9. Le changeur d'outils (200) selon l'une des revendications précédentes, dans lequel le préhenseur d'outils (260) est monté de manière mobile sur le bras pivotant (250), en particulier de manière pivotante, par exemple autour d'un axe de pivot vertical du préhenseur (C6) ou autour d'un axe de pivot horizontal du préhenseur (C8), et/ou déplaçable, en particulier déplaçable linéairement le long d'une direction de déplacement horizontale du préhenseur (Y3).

10. Le changeur d'outils (200) selon l'une des revendications précédentes, comprenant en outre :
un nettoyeur de cône (530) destiné au nettoyage d'un réceptacle à cône (171) de la broche porte-outil (170), le nettoyeur de cône (530) pouvant être saisi par le préhenseur d'outils (260), de sorte à pouvoir être déplacé vers la broche porte-outil (170) par un mouvement combiné de levage et de pivotement du bras pivotant (250) ; et/ou
une sonde de mesure (540), notamment pour mesurer le faux-rond radial et axial d'un dispositif de serrage de pièce (140) de la machine-outil (100), la sonde de mesure (540) pouvant être saisie par le préhenseur d'outils (260) afin d'être déplacée en position de mesure par un mouvement combiné de levage et de pivotement du bras pivotant (250).

11. Le changeur d'outils (200) selon l'une des revendications précédentes, comprenant en outre un dispositif de préhension de pièce (270) monté au bras pivotant (250) et conçu pour saisir des pièces (800) à partir d'un stockage de pièces (280) et les transférer sur une broche porte-pièce (130) de la machine-outil (100).

12. Le changeur d'outils (200) selon l'une des revendications précédentes, comprenant en outre :
un entraînement de chariot de levage (242), pour entraîner le chariot de levage (240) dans un mouvement de levage le long de la direction de levage (Z3) ;
un entraînement de pivotement (256) pour entraîner le bras pivotant (250) dans un mouvement de pivotement par rapport au chariot de levage (240) autour de l'axe de pivotement (C3) ; et
un dispositif de commande (180) configuré pour commander l'entraînement du chariot de levage (242), l'entraînement de pivotement (256) et le préhenseur d'outils (260),
dans lequel le dispositif de commande (180) est éventuellement configuré pour effectuer au moins une des opérations suivantes :
a) saisir un outil (500) avec le préhenseur d'outils (260) ;
b) déplacer un outil (500) saisi par le préhenseur d'outils (260) entre l'un des porte-outils (221, 222, 223, 230) et une broche porte-outil (170) de la machine-outil (100) par un mouvement combiné de levage et de pivotement du bras pivotant (250) ;
c) déplacer un outil (500) saisi par le préhenseur d'outils (260) entre deux porte-outils différents (221, 222, 223, 230) du magasin d'outils (220) par un mouvement combiné de levage et de pivotement du bras pivotant (250) ;
d) libérer et fermer la porte de cloison (330), à condition que le changeur d'outils soit configuré selon la revendication 5;
e) déplacement d'un outil (500) saisi par le préhenseur d'outils (260) vers la station de lecture (600) par un mouvement combiné de levage et de pivotement du bras pivotant (250) et lecture d'un support de données (521) sur l'outil saisi (500), à condition que le changeur d'outils soit configuré selon la revendication 6 ;
f) déplacement d'un outil (500) saisi par le préhenseur d'outils (260) vers le nettoyeur d'outils (700) par un mouvement combiné de levage et de pivotement du bras pivotant (250) et nettoyage du porte-outil (510) de l'outil (500) saisi avec le nettoyeur d'outils (700), à condition que le changeur d'outils soit configuré selon la revendication 7 ;
g) déplacer le préhenseur d'outils (260) par rapport au bras pivotant (250), à condition que le changeur d'outils soit configuré selon la revendication 9 ;
h) déplacer le nettoyeur de cônes (530) saisi par le préhenseur d'outils (260) vers la broche porte-outils (170) par un mouvement combiné de levage et de pivotement du bras pivotant (250), à condition que le changeur d'outils soit configuré selon la revendication 10 ;
j) déplacer la sonde de mesure (540) saisie par le préhenseur d'outils (260) en position de mesure par un mouvement combiné de levage et de pivotement du bras pivotant (250), à condition que le changeur d'outils soit configuré selon la revendication 10 ; et
k) saisir une pièce (800) avec le dispositif de préhension de pièce (270) et déplacer une pièce (800) saisie par le dispositif de préhension de pièce (270) entre un stockage de pièces (280) et une broche porte-pièce (130) de la machine-outil (100) par un mouvement combiné de levage et de pivotement du bras pivotant (250), à condition que le changeur d'outils soit configuré selon la revendication 11.

13. Le changeur d'outils (200) selon l'une des revendications précédentes, comprenant en outre :
un bras supplémentaire (252) monté de manière pivotante sur le bras pivotant (250) autour d'un axe de pivotement supplémentaire vertical (C5), de sorte que l'axe de pivotement supplémentaire (C5) du bras supplémentaire (252) et l'axe de pivotement (C3) du bras pivotant (250) soient parallèles et espacés l'un de l'autre,
le bras supplémentaire (252) étant de préférence verrouillable en position de repos avec le bras pivotant (250) afin d'empêcher un mouvement de pivotement du bras supplémentaire (252) autour de l'axe de pivotement supplémentaire (C5), et
le bras supplémentaire (252) étant conçu pour y fixer un dispositif de serrage de pièce (140) de la machine-outil (100), et dans lequel le changeur d'outils comprend en outre éventuellement :
un porte-dispositif de serrage (255) conçu pour être relié de manière détachable au bras auxiliaire (252) et au dispositif de serrage de la pièce (140) de telle sorte que le dispositif de serrage de la pièce (140) soit fixé au bras auxiliaire (252) via le porte-dispositif de serrage (255), en particulier soit fixé de manière suspendue,
dans lequel éventuellement un transducteur de force (258) est disposé sur le bras auxiliaire (252), pour transmettre une charge au bras auxiliaire (252).

14. Une machine-outil (100) comprenant :
un banc de machine (110) ;
une broche porte-outil (170) pour entraîner un outil (500) en rotation autour d'un axe d'outil (B), la broche porte-outil (170) étant de préférence disposée de manière pivotante dans la machine-outil (100), de sorte qu'elle puisse être amenée dans une position dans laquelle l'axe d'outil (B) s'étend de manière verticale dans l'espace ; et
un changeur d'outils (200) selon l'une des revendications précédentes,
le changeur d'outils (200) étant disposé sur le banc de machine (110) de sorte qu'un outil (500) saisi par le préhenseur d'outils (260) puisse être déplacé de l'un des porte-outils (221, 222, 223, 230) vers la broche porte-outils (170) par un mouvement combiné de levage et de pivotement du bras pivotant (250), et
éventuellement une broche porte-pièce (130) avec un dispositif de serrage de pièce (140), dans lequel le changeur d'outils (200) est conçu selon la revendication 13, et dans lequel la broche porte-pièce (130) est disposée sur le banc de machine (110) de telle sorte que le dispositif de serrage de pièce (140) puisse être fixé au bras auxiliaire (252) lorsque ce dernier est pivoté par rapport au bras pivotant (250) hors de la position de repos.

15. Utilisation d'un changeur d'outils (200) selon la revendication 13 pour changer un dispositif de serrage de pièce (140) sur une machine-outil (100).
